Europäisches Patentamt

European Patent Office

Office européen des brevets

(19)

(11) EP 0 849 693 A2

(12) EUROPEAN PATENT APPLICATION

(43) Date of publication:
24.06.1998 Bulletin 1998/26

(51) Int Cl.⁶: G06F 17/60

(21) Application number: 97310258.5

(22) Date of filing: 18.12.1997

(84) Designated Contracting States:
AT BE CH DE DK ES FI FR GB GR IE IT LI LU MC NL PT SE
Designated Extension States:
AL LT LV MK RO SI

(30) Priority: 18.12.1996 JP 337929/96
04.04.1997 JP 86592/97

(71) Applicant: Hitachi, Ltd.
Chiyoda-ku, Tokyo 101-0062 (JP)

(72) Inventors:
• Takamoto, Masanori
  Hitachi-shi (JP)
• Nonaka, Hisanori
  Naka-gun, Ibaraki-ken (JP)
• Shojima, Hiroshi
  Hitachiota-shi (JP)
• Sakai, Kunizo
  Hitachi-shi (JP)
• Sato, Tetsuo
  Hitachi-shi (JP)
• Nakamura, Hiroshi
  Hitachi-shi (JP)
• Okubo, Hirotsugu
  Kokubunji-shi (JP)
• Matsubara, Takashi
  Kodaira-shi (JP)
• Shigeta, Hideyuki
  Tachikawa-shi (JP)
• Machida, Kazuhisa
  Kawasaki-shi (JP)

(74) Representative: Calderbank, Thomas Roger et al
MEWBURN ELLIS
York House
23 Kingsway
London WC2B 6HP (GB)

(54) Decision support apparatus for emergency operations and method therefor, and a computer-readable storage medium storing therein a procedure for executing support for decision making in a disaster

(57) A decision support apparatus for emergency operations is provided to support in order that each post of local governments and the associated organs can quickly and accurately take measures against occurrence of a disaster such as a natural calamity or an unexpected incident. In addition, a computer-readable recording medium is provided to store therein an execution procedure for supporting decision making at the time of disaster. This execution procedure includes the steps of accepting (201) an input of disaster information at the time of disaster, making decision support information on the basis of an emergency operation rule previously stored, the accepted disaster information and history information of decision making actually executed at the time of past disasters, supplying it as proposed decision support information for decision making, and accepting an input of actual decision making by the person in charge. The decision making actually executed at the time of disaster, if stored as decision history, can be reflected in the later decision making.

FIG. 1

## Description

The present invention relates to a decision support apparatus for emergency operations, which can support in order for each post of a local government or the associated organ to be able to make a decision for quickly and accurately coping with an occurring natural disaster or unexpected accident. In the conventional system to support for the decision making in a disaster, a person in charge of measures to deal with natural calamities, when receiving disaster information, refers to the associated column of a written program for emergency operation or makes search/ inquiry to a database server which has stored therein the information on the situations with which each post, including the own post, or the associated organ should cope, and then decides an operation or action such as communications/notification.

So far, when the person in charge of measures to deal with the disaster, such as a prefectural governor, mayor or village headman, makes a decision of what he/she should do in the situation in which an occurring disaster is changing from moment to moment, he/she receives disaster information such as the intensity of an earthquake or the state of a fire by wire telephony or by wireless, and then refers to a database server which has stored therein the information on the situations with which each post or related organ should cope, including information of a written program for emergency operation or the own post, thereby deciding the procedure for the countermeasure. However, it is difficult for the person in charge of measures to deal with a disaster to grasp all external circumstances and to completely refer to and understand the history of what actions have been taken in a certain situation, and thus it is hard for the person in charge to take the best action against the disaster.

On the other hand, in the plant surveillance field, there is a decision support apparatus that supports for the decision making in an emergency by use of a computer which is described in JP-A-3-296699. This conventional decision support apparatus generates support information such as an operation guide when the plant falls into an abnormal condition. That is, this decision support apparatus receives an abnormal signal when the plant is abnormal, compares this abnormal signal with the previously stored information, and generates support information associated with the abnormality.

There is now a written local emergency operation program which provides the essential points of action which a local government or the like should take for a natural disaster such as a big fire, severe earthquake or storm and flood damage. However, these essential points of action for disaster are not absolutely decided for a disaster condition, but an alternative plan still remains for various different essential actions. In addition, since the disaster condition changes from moment to moment, it is difficult to know which essential action should be selected and executed for the best countermeasure against the disaster each time the condition changes. If the state of things is confused under the occurrence of a disaster, it is more difficult to make a decision for the best action against the disaster. Moreover, the possible options for the countermeasure against a disaster are changed from moment to moment by the change of the person in charge or by the history of the actions which the person in charge has taken.

Also, if part of disaster information is not transmitted, a satisfactory procedure for the well-suited actions cannot be provided against a disaster.

Accordingly, in view of the problems peculiar to the decision making in a disaster, it is an object of the invention to provide a decision support apparatus for deciding quick and accurate actions against a disaster and method therefor, and a computer-readable storage medium storing therein a procedure for executing support for decision making in a disaster.

It is another object of the invention to provide a decision support apparatus capable of presenting a satisfactory procedure for well-suited actions against a disaster even though part of disaster information is not transmitted, and a method therefor, and a storage medium having stored therein the procedure for executing the support for decision making in a disaster by reading it on a computer.

In order to achieve the first object, according to the present invention, there is provided a decision support apparatus for emergency operations including an emergency operation rule storing memory which has stored therein an emergency operation rule that describes measures to be taken according to the situation of a disaster, an information input accepting portion for receiving an input of disaster information such as the seismic center and intensity of an earthquake, or the situation of a fire, a decision history storing memory which has stored therein history information of decision making already executed, a decision support information making portion for making decision support information on the basis of the emergency operation rule, the disaster information and the history information, and a decision making information executing portion for executing the decision support information.

Thus, by making use of disaster information input changing from moment to moment and decision history information, it is possible to provide information of options for the next action to be taken and to be considered as the best action at the time of disaster. In addition, the person in charge of disaster prevention can quickly and accurately makes decision for the next action without bothering to store all the disaster situations changing from moment to moment and the decision history of measures taken so far.

Moreover, in order to achieve the second object, the emergency operation rule storing memory is searched according to a plurality of disaster information received through the disaster information input means, and reference information or support information formed of options is produced and supplied. In addition, disaster information estimating means is provided to estimate other disaster information lost from the inputted disaster information, and complement the disaster information.

Therefore, even though disaster information is not acquired due to any trouble, the lost disaster information can be estimated from the past actual disasters and empirical knowledge, and an execution procedure fitted to the disaster situation can be proposed as support information to the operator, so that the measures against disaster can be quickly and accurately taken.

In the drawings

Fig. 1 is a block diagram of the construction of an embodiment of a decision support apparatus according to the invention.

Fig. 2 is a flowchart of an example of the process flow according to the invention.

Fig. 3 shows a display screen on which an example of the output from the apparatus is displayed.

Fig. 4 is a diagram showing an example of input data of disaster information.

Fig. 5 is a diagram showing an example of data of an emergency operation rule.

Fig. 6 is a diagram showing an example of decision history data.

Fig. 7 is a block diagram of an example of the construction of the apparatus for the case in which the person in charge is identified.

Fig. 8 is a flowchart of an example of the process flow for identifying the person in charge.

Fig. 9 is a diagram showing an example of data of identified person data.

Fig. 10 is a diagram showing an example of emergency operation rule data with authority added over measures.

Fig. 11 shows a display screen on which an example of the output for certification to an individual is displayed.

Fig. 12 is a picture showing an example of personal information acquisition.

Fig. 13 is a block diagram of an example of the construction for warning against the provisions of measures which are not taken yet.

Fig. 14 is a flowchart of an example of the process flow for warning against the provisions of measures which are not taken yet.

Fig. 15 is a display screen which is displaying an example of the output for warning against the provisions of measures which are not taken yet.

Fig. 16 is a block diagram of an example of the construction for dealing with unexpected phenomena or the like.

Fig. 17 is a flowchart of an example of the process flow for dealing with unexpected phenomena or the like.

Fig. 18 is a diagram showing an example of input data of disaster information having the degree of importance.

Fig. 19 is a diagram showing an example of emergency operation rule data against unexpected phenomena.

Fig. 20 is a display screen which is displaying an example of the output against unexpected phenomena or the like.

Fig. 21 is a block diagram of an example of the construction against the case in which there is no disaster information to be inputted.

Fig. 22 is a flowchart of an example of the process flow against the case in which there is no disaster information to be inputted.

Fig. 23 is a diagram showing an example of input data of disaster information (event) in the case where there is no disaster information to be inputted.

Fig. 24 is a table of the contents and codes of disaster information (event) in the case where there is no disaster information to be inputted.

Fig. 25 is a diagram showing an example of emergency operation rule data in the case where there is no disaster information to be inputted.

Fig. 26 is a block diagram of an example of the construction of a disaster information estimation apparatus in the case where there is no disaster information to be inputted.

Fig. 27 is a diagram showing an example of the model of information associated with disaster information in the case where there is no disaster information to be inputted.

Fig. 28 is a flowchart of an example of the process flow for complement information searching means in the case where there is no disaster information to be inputted.

Fig. 29 is a flowchart of an example of the process flow for complement information confirming means in the case where there in no disaster information to be inputted.

Fig. 30 is a diagram showing an example of the event network for history of disaster in the case where there is no disaster information to be inputted.

Fig. 31 is a list of disaster information (event) with respect to time in the case where there is no disaster information to be inputted.

Fig. 32 is a block diagram of an example of the construction for checking if disaster information is true.

Fig. 33 is a flowchart of an example of the process flow for checking if disaster information is true.

Fig. 34 is a diagram showing an example of disaster information input data and emergency operation rule data for checking if disaster information is true.

Fig. 35 is a display screen which is displaying an example of the output for checking if disaster information is true.

Fig. 36 is a block diagram of an example of the apparatus construction for changing the rule and decision making support information in response to a plurality of situations or conditions.

Fig. 37 is a flowchart of an example of the process flow for changing the rule and decision making support information in response to a plurality of situations or conditions.

Fig. 38 is a display screen which displays an example of the output for changing the rule and decision making support information in response to a plurality of situations or conditions.

Fig. 39 is a block diagram of an example of the construction for changing the decision making support information by inputting the emergency operation rule.

Fig. 40 is a flowchart of an example of the process flow for changing the decision making support information by inputting the emergency operation rule.

Fig. 41 is a flowchart of an example of the process flow for producing the emergency operation rule which controls disaster information input.

Fig. 42 is a flowchart of an example of the process flow for producing the emergency operation rule which controls emergency operations output.

Fig. 43 is a flowchart of an example of the process flow for producing the emergency operation rule which controls guidance contents output.

Fig. 44 is a display screen which is displaying an example of the output for changing decision making support information by inputting the emergency operation rule, in a situation report window.

Fig. 45 is a display screen which is displaying an example of the output for changing decision making support information by inputting the emergency operation rule, in an emergency operation item window.

Fig. 46 is a display screen which is displaying an example of the output for changing decision making support information by inputting the emergency operation rule, in a guidance window.

Fig. 47 is a block diagram of an example of the construction for a plurality of users to refer to/input the decision making support information.

Fig. 48 is a diagram showing an example of the network structure for a plurality of users to refer to/ input the decision making support information.

Fig. 49 is a block diagram of an example of the construction of a disaster information manager.

Fig. 50 is a diagram showing an example of the emergency operation rule data in a governor's room.

Fig. 51 is a diagram showing an example of emergency operation rule data in a disaster measures section of a prefecture.

Fig. 52 is a display screen which is displaying an example of the output in a governor's room.

Fig. 53 is a display screen which is displaying an example of the output in a disaster measures section of a prefecture.

Fig. 54 is a display screen which is displaying an example of the output from the decision support apparatus.

Fig. 55 is a diagram showing an example of the emergency operation rule data as a warning in a disaster measures section of a prefecture.

Fig. 56 is a display screen which is displaying an example of the output in a disaster measures section of a prefecture.

Fig. 57 is a display screen which is displaying an example of the output for the confirmation of information reception.

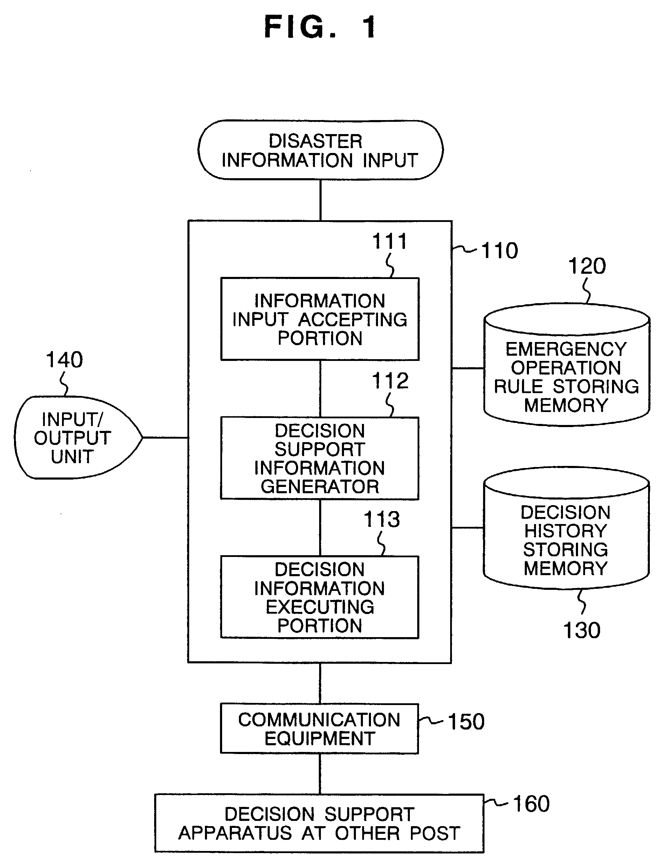

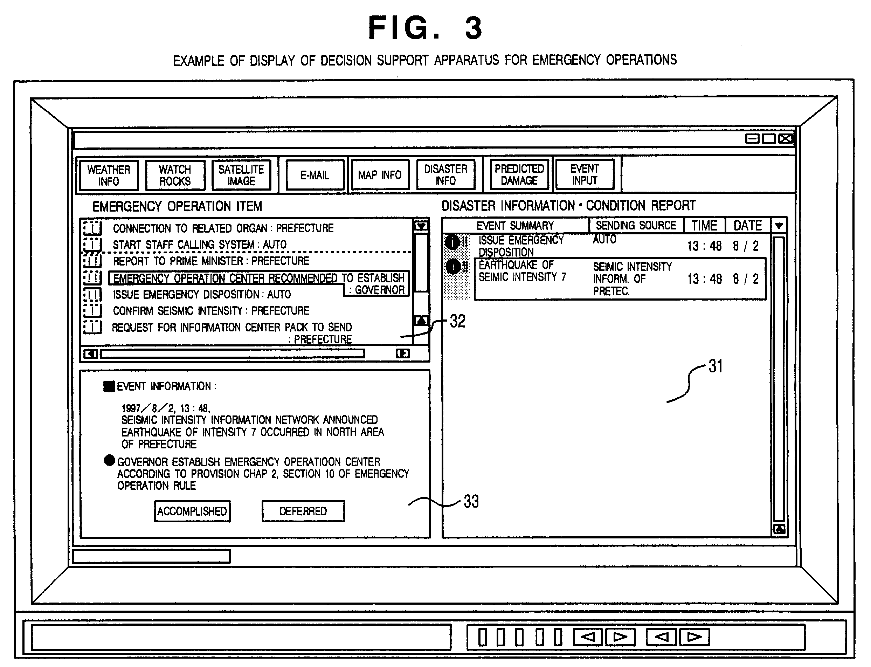

Fig. 1 is a block diagram of a decision support apparatus for emergency operations, 110 according to one embodiment of the invention. The decision support apparatus for emergency operations, 110 is connected to an input/output unit 140 which receives and produces disaster conditions, related measures and instructions for emergency operations, and which is formed of an input unit such as a keyboard and a mouse, and an output unit such as a display for displaying the output as will be described later with reference to Fig. 3, to a communication equipment 150 which transmits the contents of own post's decision making to other posts or to a decision history memory 130 where the contents are stored or receives contents of other post's decision making from other apparatus, to an emergency operation rule memory 120 which has previously stored therein emergency operations associated with disaster conditions and procedures for the execution, and to the decision history memory 130 for storing the contents of the decision making which has already been made according to decision making which has already been made according to decision making information. The output displayed on the screen as shown in Fig. 3 is specifically formed of a condition report window 31 (hereinafter, simply called window 31) which is located on the right-hand side of the display screen in order to display disaster information and decision history, an emergency operation window 32 (hereinafter, called window 32) which is located on the upper left-hand side of the screen in order to display emergency operations, and a guidance window 33 (hereinafter, called window 33) which is located on the lower left-hand side of the screen in order to display the procedure for the operations. In this embodiment, the window 31 displays disaster information of, an earthquake of intensity 7 having occurred, and a decision history of, for example, an emergency disposition structure having been issued. The decision support apparatus for emergency operations, itself, has an information input accepting portion 111 for accepting the input of a warning against a disaster and disaster information of, for example, seismic center, seismic intensity, and fire conditions when the disaster has occurred, a decision support information generator 112 which generates support information for decision making on the basis of the emergency operation rule already stored in the emergency operation rule memory 120 and the decision history information decided by the decision support apparatus 110 in order to cope with an occurring disaster, and a decision information executing portion 113 which implements the decision information according to the emergency operations generated by the decision support information generator 112 and the procedure for those operations.

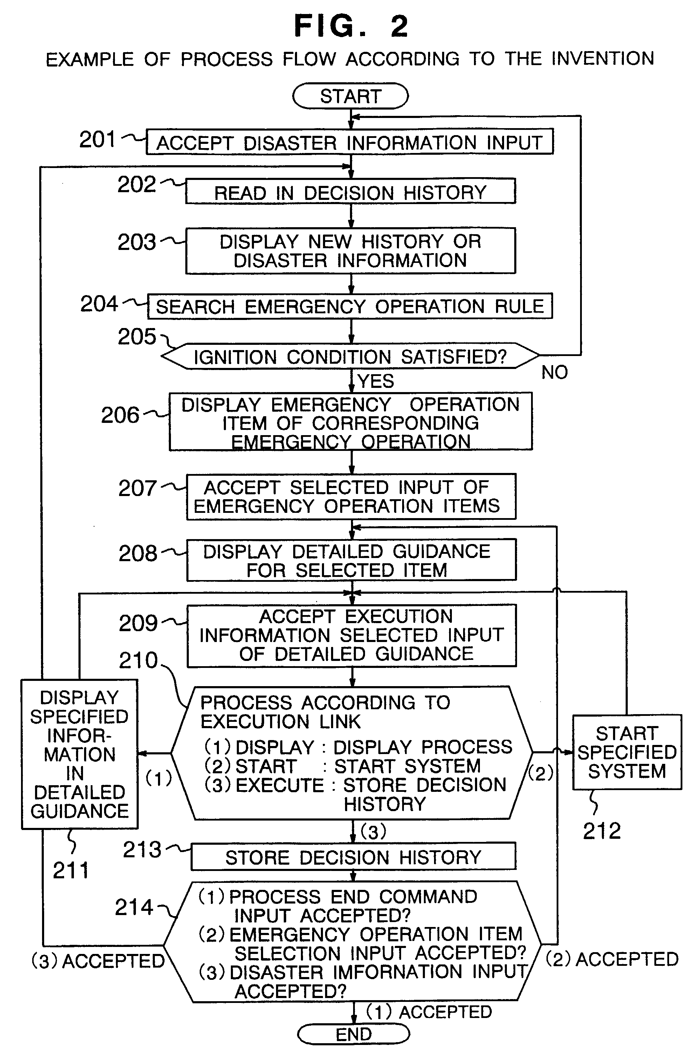

Although this decision support apparatus for emergency operations, 110 is practically formed by the information input accepting portion 111, decision support information generator 112 and decision information executing portion 113, it may be realized by use of a computer such as a personal computer with an arithmetic unit provided, and a storage medium having stored therein an application program for achieving the functions of this apparatus as shown in Fig. 2, and by inserting this storage medium into the computer and installing the application program in the computer, so as to have the same functions as the information input accepting portion 111, decision support information generator 112 and decision information executing portion 113. In addition, the emergency operation rule memory 120 and decision history memory 130 may be provided as database memories at a place separated away from the decision support apparatus for emergency operations. In this case, the decision support apparatus 110 communicates with each of the memories 120, 130 through the communication equipment 150 and a transmission path such as a network.

The procedure for the process according to the invention will be described with reference to Fig. 2 which is a flowchart of the procedure for the process according to the invention.

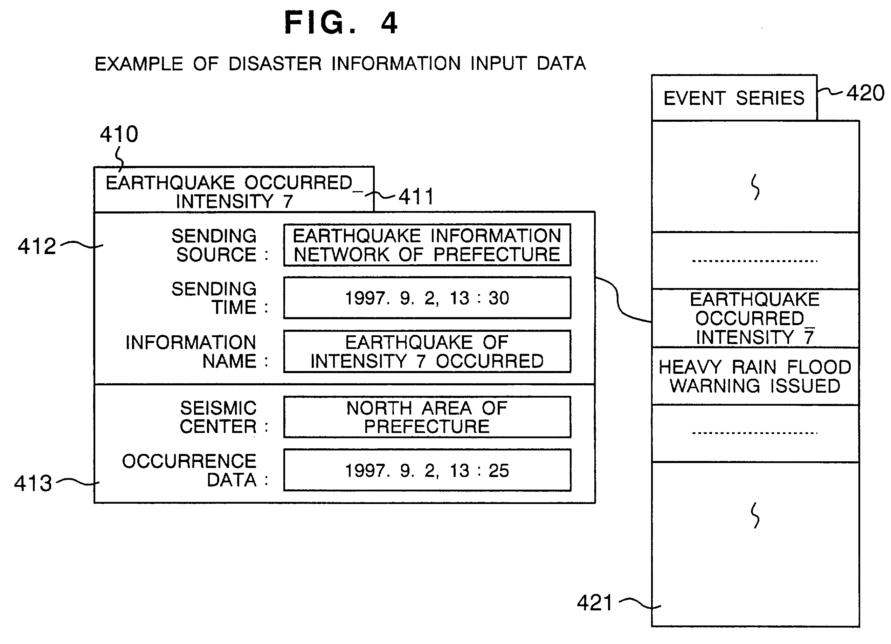

The information input accepting portion 111 of the decision support apparatus according to the invention accepts the input of disaster information (step 201). If, for example, an earthquake occurs, disaster information such as the seismic center and seismic intensity received by telephone or wireless is inputted on a keyboard as the input unit of the input/output unit 140, or disaster information data such as the seismic center and seismic intensity is directly received and accepted as the input to the apparatus. Fig. 4 shows the format of the disaster information input data accepted by the disaster information input accepting portion 111. The disaster information input data, as shown in Fig. 4 at an event series 420, is inputted in the sequential order. Reference numeral 410 represents the format in which the contents of disaster information are stored, such as "an earthquake of intensity 7 has occurred". Reference numeral 411 represents the identification code for discriminating disaster information. The items to be stored (412) include sending source, sending time and information name. The information typical of the disaster can be added depending on the contents of disaster. For example, items of seismic center and occurrence time (413) can be added to an occurrence of an earthquake. The items to be stored (sending source, sending time, information name) are displayed within the window 31 as shown in Fig. 3.

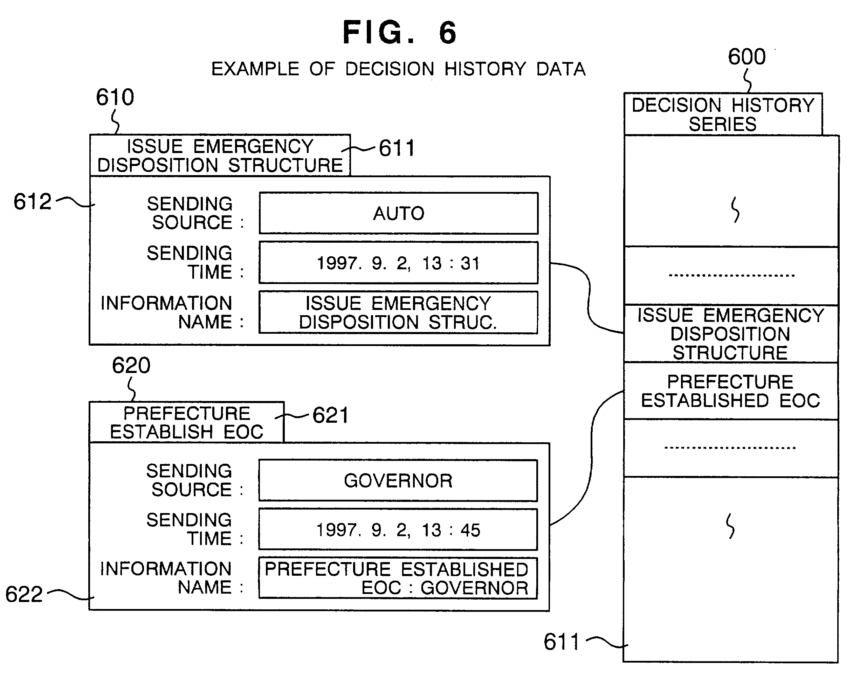

Then, when the decision support apparatus 110 accepts disaster information, the decision history is read in from the decision history memory 130 (step 202). Fig. 6 shows the format of the decision history stored in the decision history memory 130. A decision history series 600 to be stored in the decision history memory 130 is stored, for example, in the sequential order in which the decision making has been performed. In the initial state in which no selection or decision is made, the decision history series 600 has no history. Reference numeral 610 represents the format in which the contents of decision history are stored, such as, for example, emergency disposition structure issued. The items of the contents to be stored include sending source, sending time and information name, which are described and distributed by an execution link process program which will be mentioned later. The sending source "automatic", here, indicates that automatic issue and transmission of information are performed against an earthquake of intensity 7 or above irrespective of the sending source. Reference numeral 620 indicates the format in which the contents of decision history are stored, such as, for example, "Emergency Operations Center established in a prefecture". This format includes the same items as the sending source, sending time and information name at 610. In this embodiment, it is hereinafter assumed that these three items are stored by the common execution link process. The items to be stored (sending source, sending time, information name) are displayed within the window 31 as illustrated in Fig. 3.

The decision support information generator 112 of the decision support apparatus 110 forces the display to indicates the accepted disaster information and the decision history stored in the decision history memory 130 on the screen as described previously (step 203). The contents displayed at this time are shown in Fig. 3.

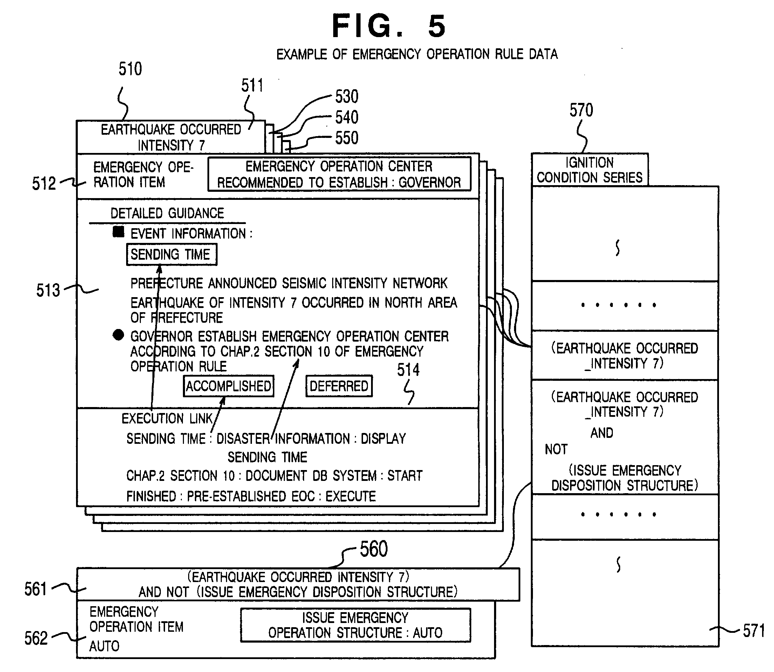

The decision support information generator 112 of the decision support apparatus 110 searches the emergency operation rule stored in the emergency operation rule memory 120 in order to generate decision-making information, namely information on the emergency operations and the procedure for the operations (step 204). It is decided if ignition conditions are satisfied (step 205). Fig. 5 shows the format in which the emergency operation rule data is stored in the decision history 120.

The emergency operation rule is formed of an ignition condition portion 511, an emergency operation item portion 512, a detailed guidance portion 513 and an execution link portion 514. An example of the emergency operation rule against an earthquake of intensity 7 occurring is described as at 510 to 513. That is, "an earthquake occurred_intensity 7" is described at the ignition condition portion 511, the contents displayed in the windows 32, 33 are described at the emergency operation item portion 512 and detailed guidance portion 513, respectively, and the key words to be selected or executed within the window 33 are specified at the execution link portion. In Fig. 5, it is assumed that the key words in the detailed guidance portion are enclosed by rectangles, and that the execution link has (display), (start) and (execute) established. For example, in Fig. 5, "sending time" within the detailed guidance corresponds to automatic displaying of disaster information sending time, "Chapter 2 •Section 10" corresponds to the starting of a document DB system, and "Completion" or "finished" corresponds to the execution of storing the history of "Emergency Operations Center established" in the decision history memory 130. When there are a plurality of emergency operations against the same ignition condition, a plurality of sets of ignition condition, emergency operation item portion, detailed guidance portion and execution link portion are stored for each of the emergency operations items (510, 530, 540, 550).

When there is no information at each portion, those portions may be omitted. Also, a logic expression for indicating an emergency operation condition can be described at the ignition condition portion. For example, reference numerals 560 to 562 represent one example of the emergency operation rule data corresponding to the facts that an earthquake of intensity 7 occurs and that no emergency disposition structure is issued. A logic expression of "(Earthquake occurred_intensity 7) AND NOT (emergency disposition structure issued)" is described at the ignition condition portion 561, and item name and "automatic" indicating that it is issued unconditionally are written down together at the emergency operation item portion 562. In this case, since it is automatically issued unconditionally, there is particularly no need to have the detailed guidance and execution link, and thus these are omitted.

Each ignition condition portion of the emergency operation rule is separately stored as an ignition condition series 570, and the location at which the emergency operation rule is stored is associated with the location 571 at which each ignition condition is stored as the ignition condition series by proper indicating means such as pointer.

The ignition conditions mean the conditional phrases formed of disaster information identification code 411 and decision history identification code 611 as illustrated at the ignition condition series 570 in the example of emergency operation rule data shown in Fig. 5. At step 205, if the ignition conditions are decided not to be satisfied, the program goes back to the disaster information accepting mode 201. At step 205, if the ignition conditions are decided to be satisfied, the decision support information generator 112 orders the display to indicate the emergency operation item 512 in the emergency operation rule (step 206). Then, an option input of the emergency operation item is accepted by a keyboard or the like as the input means of the input/output unit in order to display the procedure for the emergency operation which the operator has decided to execute (step 207). The procedure (detailed guidance 513) for the operation selected at step 207 is displayed (at step 208). The selected operation within the detailed guidance at step 208 is accepted in order that the person in charge of emergency operation can execute the specific procedure for the operation (at step 209). Since the contents of the execution link shown at 514 are set up to the key words within the detailed guidance 513 as illustrated in the emergency operation rule data of Fig. 5, the operator clicks each key word by the mouse so that the selected operation can be accepted. If a key word is selected, the process is executed according to the contents of the selected execution link (at step 210). A plurality of different links are established as shown in Fig. 5. If the selected key word corresponds to "display" link, the designated information is displayed within the detailed guidance (at step 211, the disaster information sending time at 412 in Fig. 4 is displayed in the example of Fig. 5). If it corresponds to "start" link, the designated system is started (at step 212, the document DB system is shown in the example of Fig. 5, and if the operator finishes the use of the start system, the operator ends the system). If it corresponds to "execution" link, the operations described in the detailed guidance are decided to have been executed, and the history is stored in the decision history memory 130 in the format shown in Fig. 6 (step 213). The process at step 213 corresponds to the execution of the execution link process program. Then, it is decided if the input of process end instruction is accepted, and if there is any input of selected emergency operation (at step 214). If the order to end process is accepted, a series of processes is caused to end. If a selected emergency operation is accepted, the program goes back to step 208. If the decision does not correspond to both the cases, the program goes back to step 201. So far, we have described the specific process procedure for decision making according to the invention.

If the system for issuing orders or commands is definite, it is necessary to prevent unauthorized persons from doing decision making by use of this decision support apparatus.

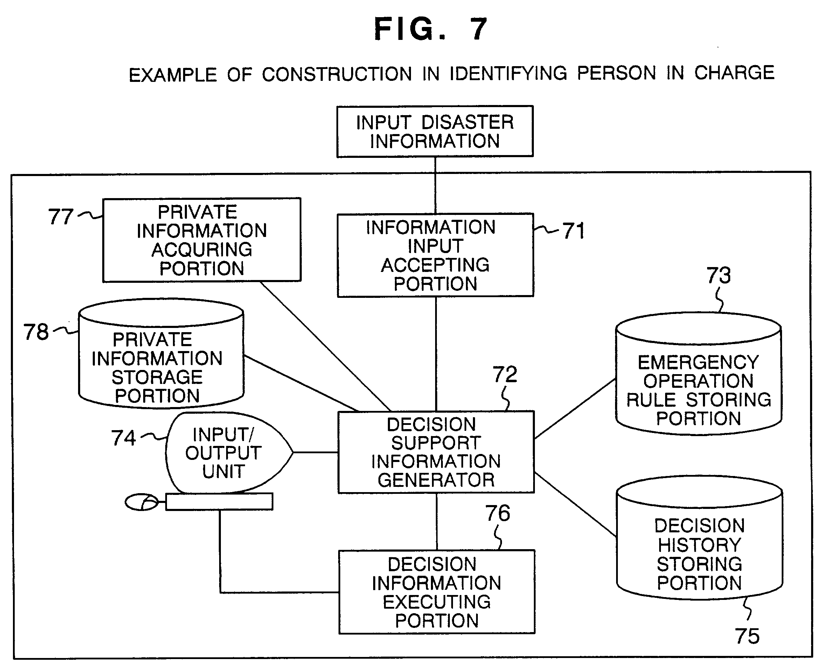

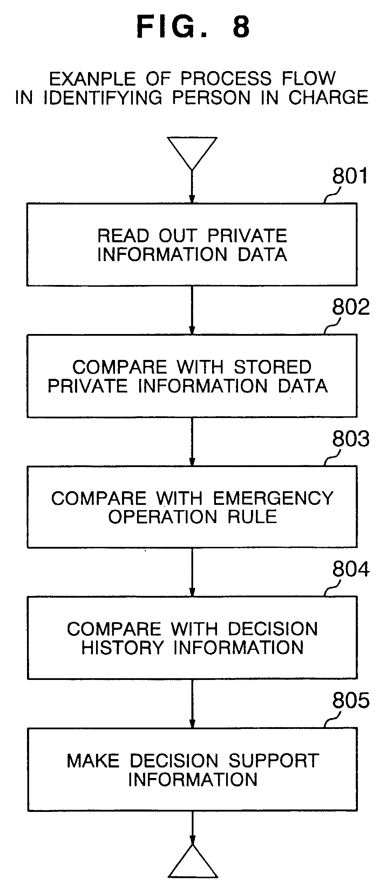

Thus, it is necessary to decide if the person in charge of emergency operation is rightful, or a well-suited person. The process for this case will be described with reference to Figs. 7 and 8.

Fig. 7 is a block diagram of the construction for deciding if the operator is fit for the post to take an action against a disaster condition, according to the invention. Fig. 8 is a flowchart of the process flow.

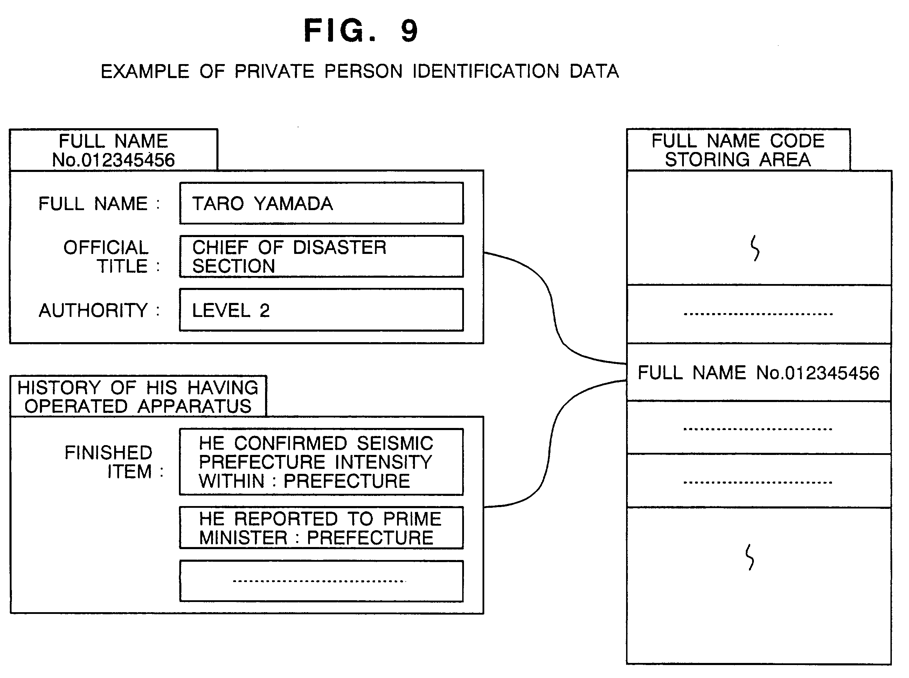

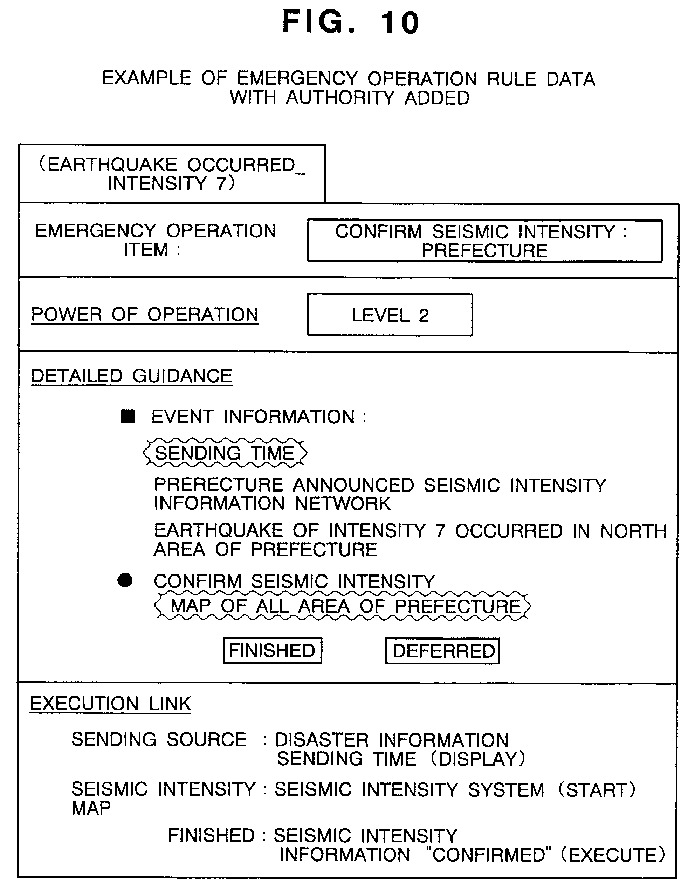

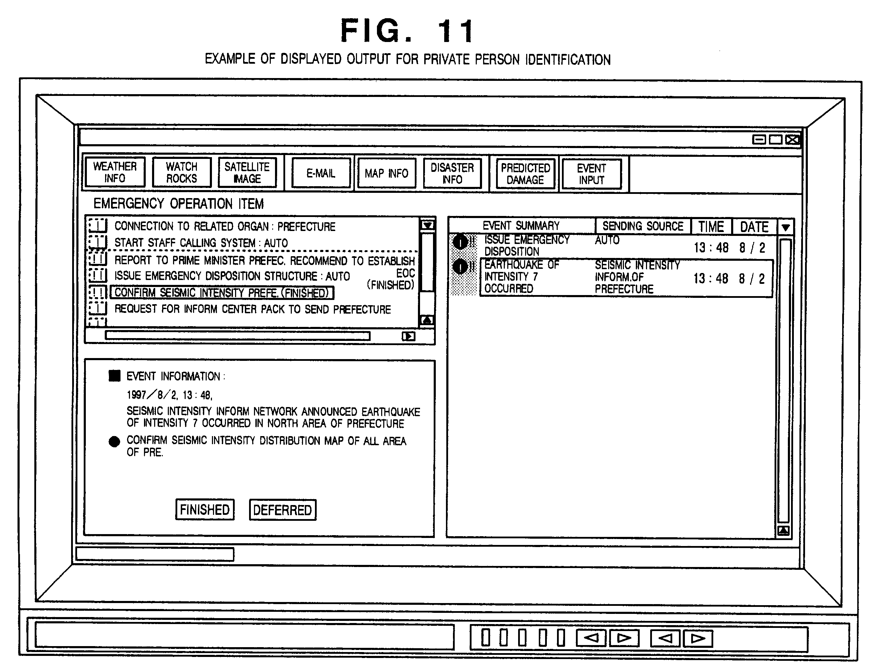

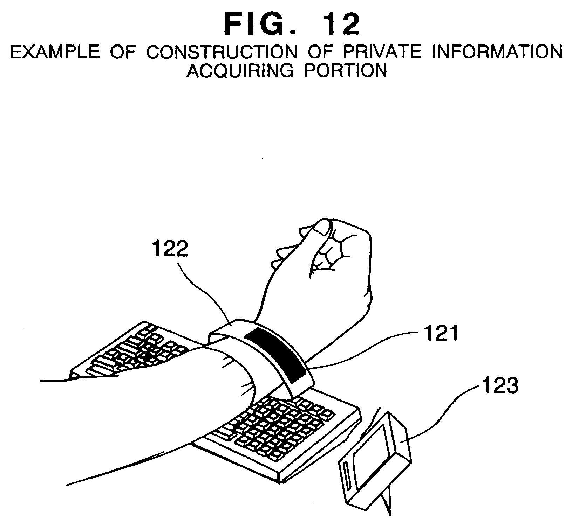

A private information acquiring portion 77 acquires the personal information data of the operator (at step 801), and compares it with the personal certification data stored in a private information storage portion 78 (at step 802). A decision support generator 72 compares the collated result with the emergency operation rule stored in an emergency operation rule storing memory 73 (step 803), and with the decision history information stored in a decision history memory 75 (at step 804), thus generating decision support information. Fig. 9 shows an example of the private certification data. The full name code is stored in the full name code storage area. The full name code is associated with the personal certification data storage areas shown in Fig. 9. The personal certification data storage area has the full name, sort of occupation, and rank of authority associated with the full name code. Fig. 10 shows an example of the emergency operation rule data with additional authority for operations against disaster. That is, an operation power is added to the condition portion, emergency operation item, detailed guidance and execution link, and its rank is expressed in level so as to correspond to the expression of the authority or power in the personal certification data shown in Fig. 9. Fig. 11 shows an example of the displayed output. In Fig. 11, it is assumed that there are operations which only the governor executes and operations which general prefectural employees can execute, of a plurality of emergency operations against, for example, "an earthquake of intensity 7 occurred", and that the operator is a general prefectural employee. Then, the private information acquiring portion 77 acquires the full name code of the operator, searches for the full name code from the full name code storage area of the personal information storage portion 78, and reads out the power level of the operator so that the display is caused to indicate emergency operations which coincide with the level of the operator's power, of the emergency operation rule. In Fig. 11, the item "prefecture recommended to establish Emergency Operations Center: governor" which only the governor can do, of a plurality of emergency operations, is crossed out by an erase line so as not to be selected. Fig. 12 shows a specific example of the construction of the private information acquiring portion 77. The operator carries a wrist band 122 with a wireless tag 121 attached to transmit private information, and causes a readout 123 to read the private information, thus the private information being acquired. According to this embodiment, the security against the operation can be automatically maintained.

In addition, when the operation on this decision support apparatus is interrupted, it is necessary to smoothly continue to operate.

Therefore, the operator can continue to operate from the condition in which he/she previously executed emergency operations, while the related items are being displayed, on the basis of the private information data acquired by the private information acquiring portion 77, the personal certification information within the personal information storage portion 78, and the decision history information within the decision history memory 75. For example, if the operator is found to be a certain general prefectural employee from the personal identification data, the emergency operations which the operator previously performed are marked with "(finished)" as in Fig. 11, and thus the operator, or the prefectural employee can continue to operate from his/her last operation. According to this embodiment, each operator can effectively continue to operate.

In addition, if none of the displayed emergency operations are performed yet by the decision support apparatus, it is necessary to inform the operator of something to do.

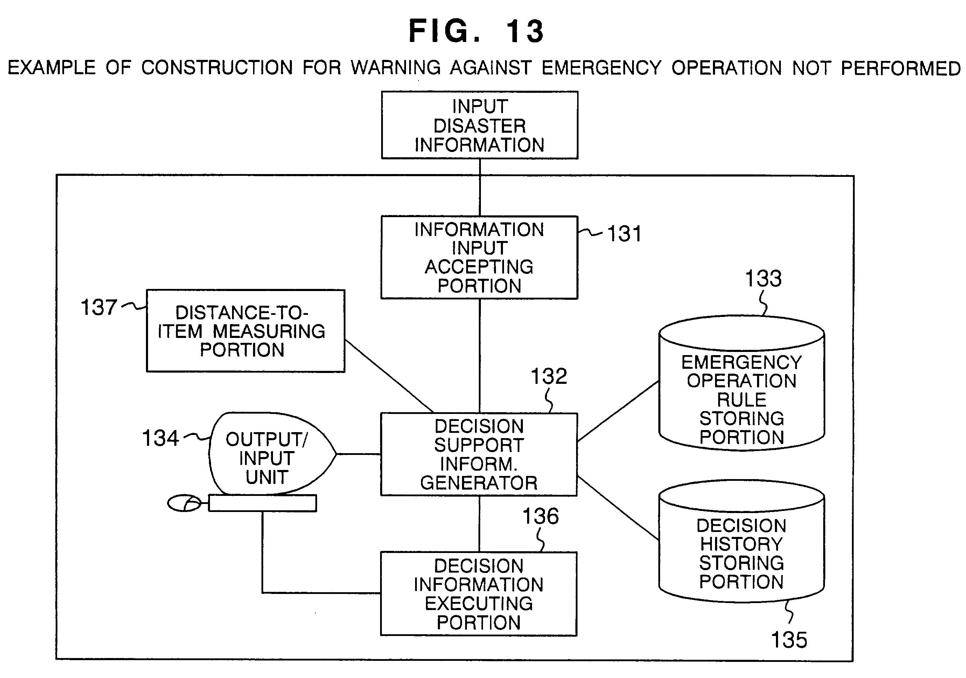

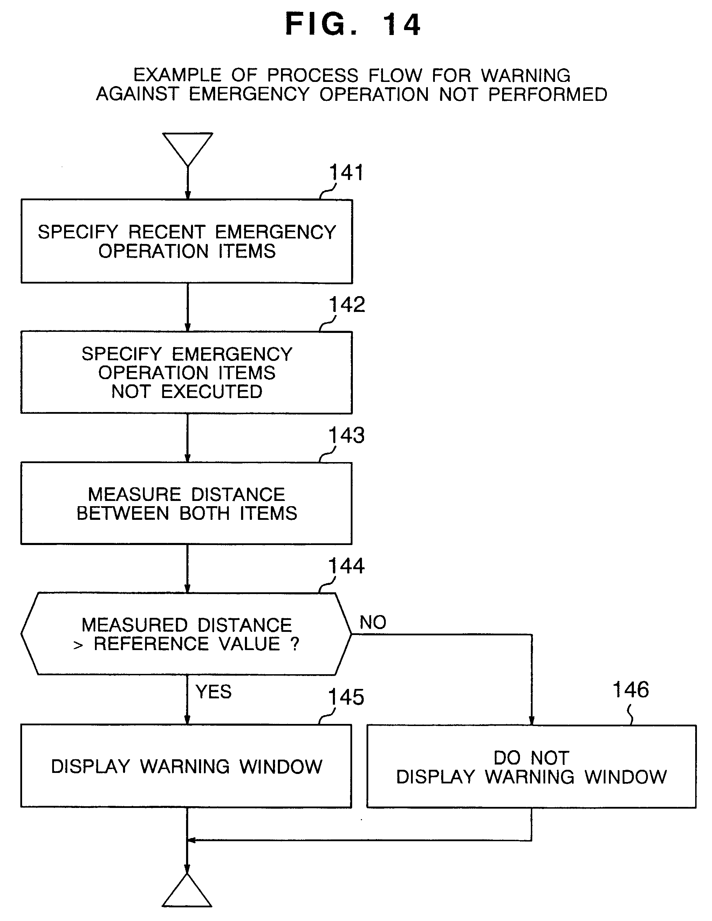

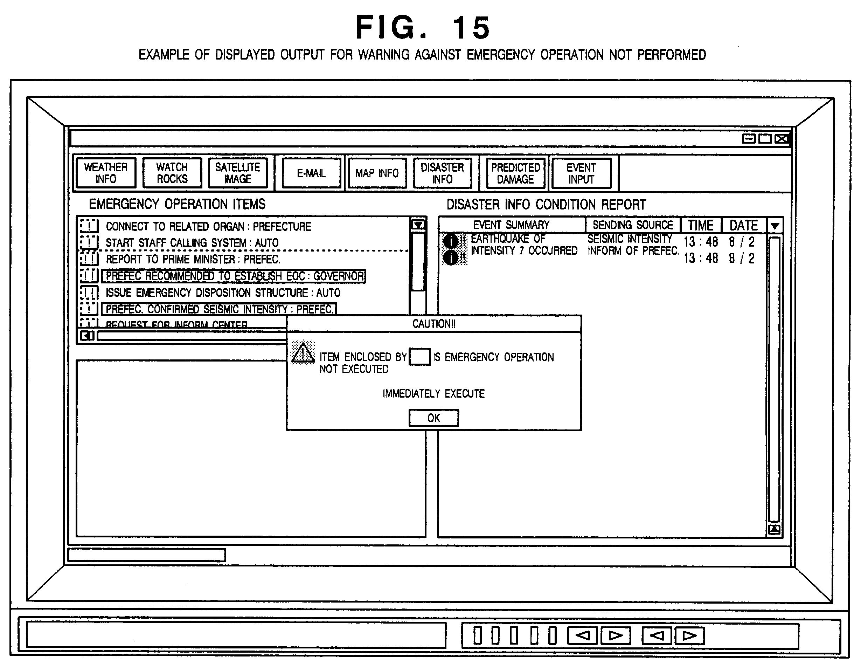

Fig. 13 shows another construction to alarm the person in charge if the person within a constant distance do not make a decision making operation, on the basis of the number of output items, time and a distance standard such as importance degree item up to now after the display of emergency operation items. Fig. 14 shows the process flow. When a decision support information generator 132 accepts the selected input of the emergency operation items displayed in the emergency operation item window, a distance-to-item measuring portion 137 stores it as the latest, performed emergency operation item (step 141), specifies nonselected ones of the displayed emergency operation items (step 142), measures the distance between the latest selected item and the nonselected items (step 143), and compares the measured distances with a certain definite reference value (step 144). If the measured distance is larger than the reference value, an alarm is displayed by an input/output unit 134 (step 145). Fig. 15 shows an example of the displayed output according to this embodiment. In Fig. 15, after the emergency operation items are displayed against "an earthquake of intensity 7 occurred", "prefecture recommended to establish Emergency Operations Center: governor" and "confirm prefectural seismic intensity information: prefecture" are found not to be chosen, and the latest, selected emergency operation item is indicated to be "notify related organs associated with emergency disposition: prefecture". If the distance is taken as the number of displayed items, and if the reference value is 2, the distances from "notify related organs associated with emergency disposition: prefecture" to "prefecture recommended to establish Emergency Operations Center: governor" and "confirm prefectural seismic intensity information: prefecture" are respectively 3 (> 2) and 5 (> 2). Thus, both items are enclosed by rectangles or the like so as to be distinguished from others, and an alarm window to notify of being not operated is displayed. Thus, according to this embodiment, it is possible to prevent the emergency operations from oversight.

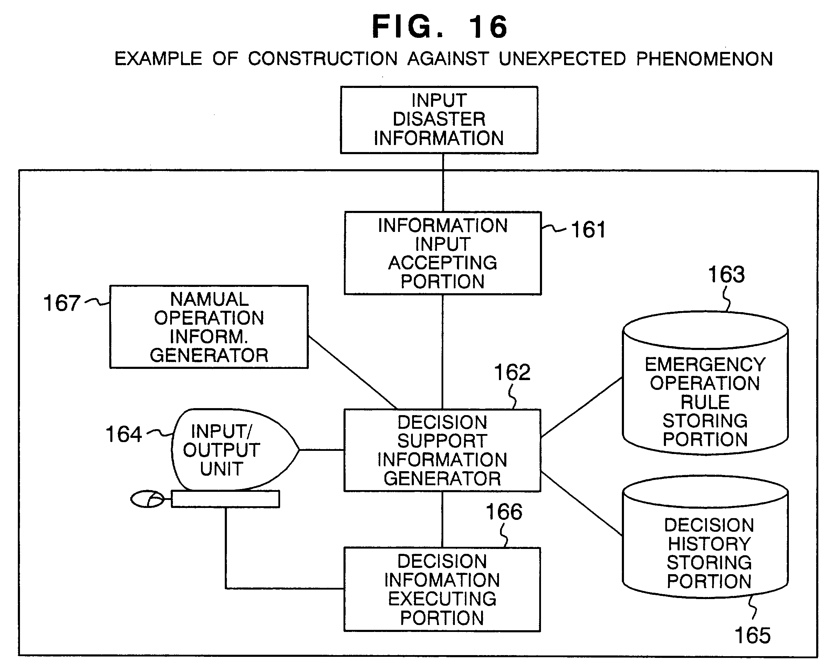

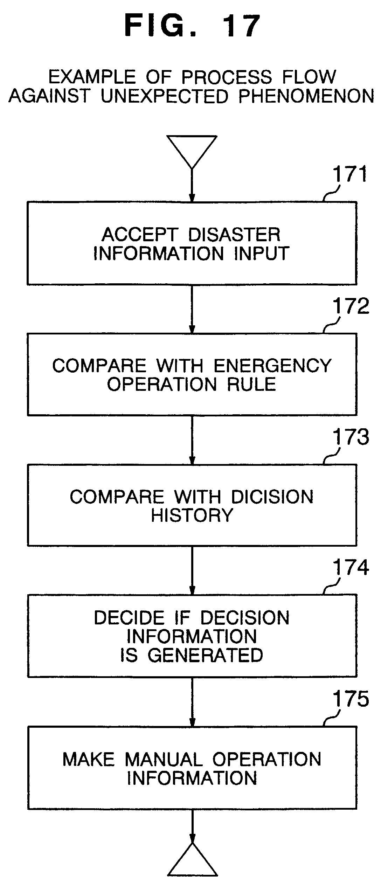

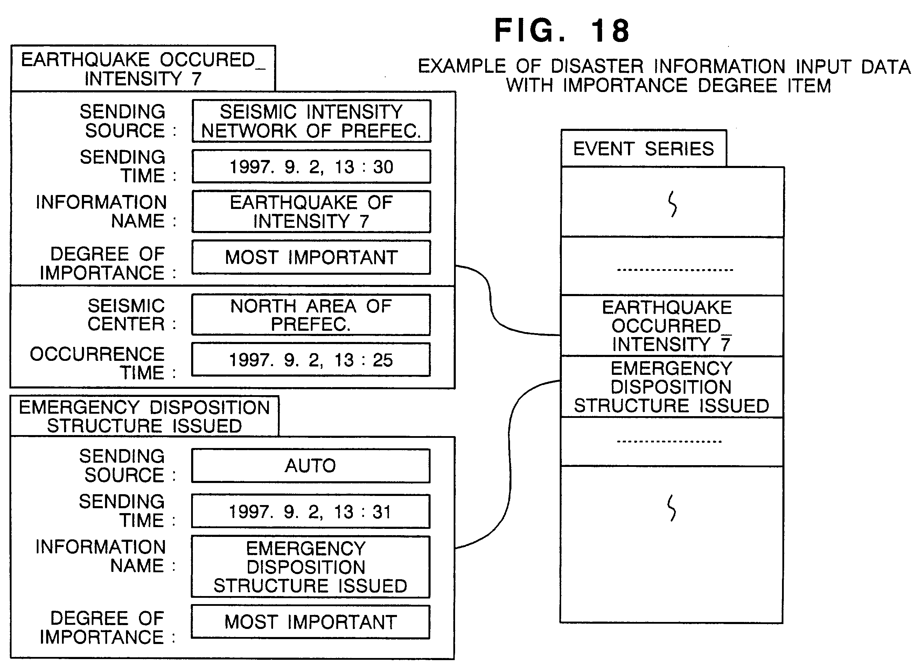

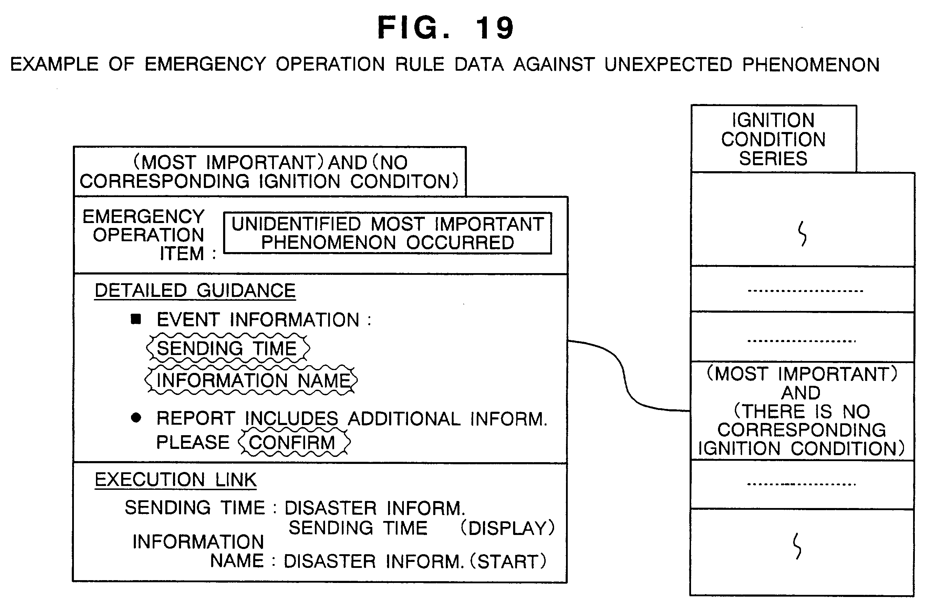

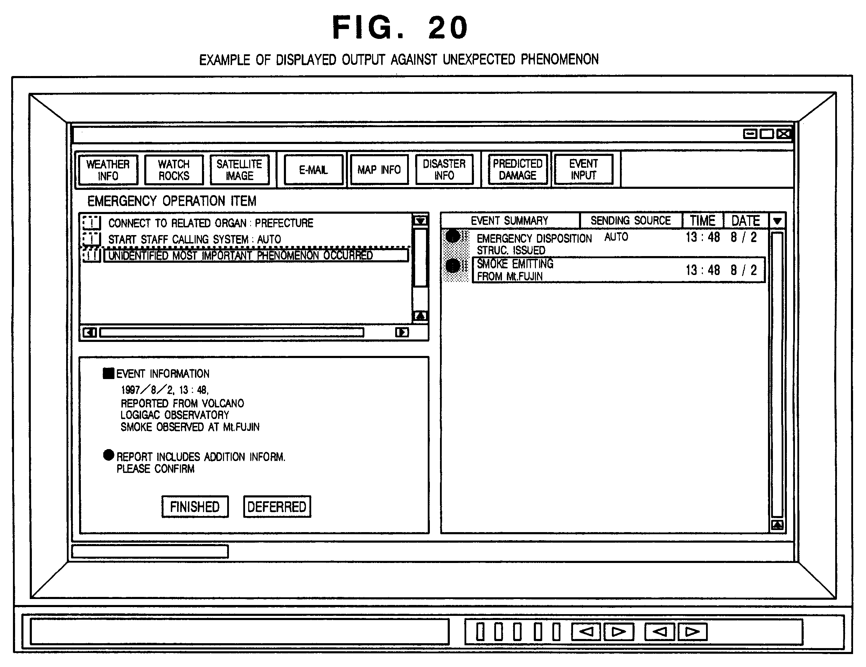

In addition, if the decision support information cannot be produced by a defect in the stored emergency operation rule, inputted disaster information or inputted decision history information while it is normally produced on the basis of those information, it is necessary to provide some countermeasure against that. In that case, it is required to notify of this fact and to manually make a decision making operation. Fig. 16 shows, as another embodiment, the construction against that case. Fig. 17 shows the process flow. When an information input accepting portion 161 accepts a disaster information input (step 171), a decision support information generator 162 compares it with the emergency operation rule (at step 172), and with the decision history (at step 173), and decides if the decision support information can be generated from the result (at step 174). If it is decided that the decision support information cannot be produced, a manual operation information generator 167 produces manual operation information (at step 175). Fig. 18 shows a specific example of disaster information input data according to this embodiment, in the case where decision support information cannot be produced due to some reason resulting from the emergency operation rule and disaster information input data. Fig. 19 shows a specific example of the emergency operation rule. As illustrated in Fig. 18, the disaster information data has an importance item provided as its attribute, so that the input side can select any one of importance ranks, "average", "important" and "most important". In Fig. 19, when there is no ignition condition within the emergency operation rule even though the importance rank is "most important", the associated condition "(most important) AND (there is no ignition condition)" is added to a series of ignition conditions, and a description to the effect that the operator manually takes measures is given to the emergency operation item, detailed guidance item, execution link item. Fig. 20 shows an example of the displayed output according to this embodiment. In Fig. 20, it is assumed that disaster information "Smoke rising from Mount Fujin" having the importance attribute "most important" is inputted, and if the emergency operation rule does not have a description of an ignition condition fitted to a volcanic eruption, the decision support information generator 162 transfers the process to the manual operation information generator 167, the generator 167 searches for the condition "(most important) AND (there is no ignition condition)" from the ignition condition series of the emergency operation rule, and forces the input/output unit 164 to display "an unidentified most important phenomenon has occurred" in the window 32, and the contents of the phenomenon and additional information confirmation as guidance information in the window 33, urging the operator to manually take measures. Thus, according to this embodiment, it is also possible to continuously execute emergency operations against an unexpected phenomenon.

Another embodiment will be described which can cope with the case in which some of information to be inputted are not inputted.

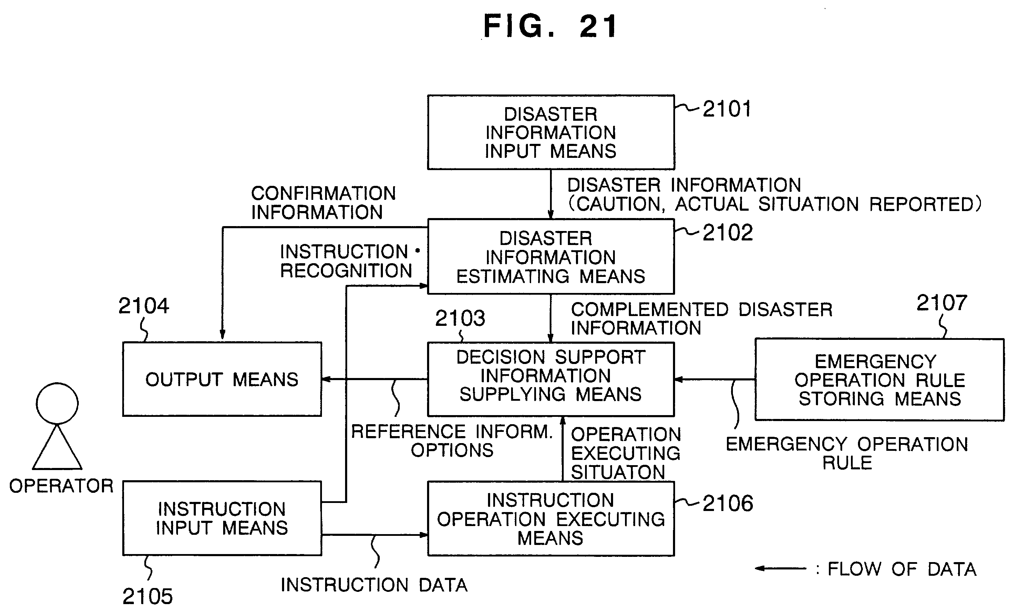

Fig. 21 shows another embodiment of the invention. In this embodiment, the decision support apparatus for emergency operations includes disaster information input means 2101, disaster information estimating means 2102, decision support information providing means 2103, output means 2104, instruction input means 2105, instruction operation executing means 2106, and emergency operation rule memory means 2107.

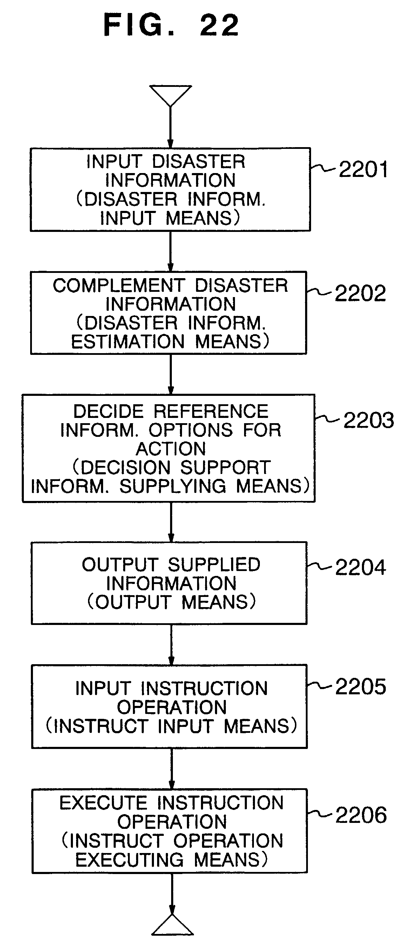

Fig. 22 shows the process flow for the decision support apparatus illustrated in Fig. 21.

At step 2201, disaster information such as a warning or real disaster report is inputted, and then at step 2202, if disaster information can be considered to lack something, this information is complemented. At step 2203, the options of information and actions to be provided are determined, and at step 2204, provided information is outputted. At step 2205, the operator inputs an instruction to operate the decision support apparatus, and at step 2206, the inputted instruction is executed.

In Fig. 22, the step 2201 is executed by the disaster information input means 2101, the step 2202 by the disaster information estimating means 2102, the step 2203 by the decision support providing means 2103, the step 2204 by the output means 2104, the step 2205 by the instruction input means 2105, and the step 2206 by the instruction executing means 2106.

The operation of the decision support apparatus according to this embodiment will be described according to a specific example of decision making in each post against an occurring disaster.

Hereinafter, it is assumed that this decision support apparatus is used by emergency operations organs of local governments such as prefectures in Japan, in which the leader of a local government decides if Emergency Operations Center should be established according to the contents of the report of a disaster occurrence.

The disaster information input means 2101 has at least a display, a keyboard, a pen-input type input unit, and network communication means so that disaster information inputting posts can input disaster information and that these disaster information can be transmitted through a network to the disaster information estimating means 2102.

In addition, when disaster information to be inputted is electronic information of seismic intensity, wind velocity or the like, the disaster information input means 2101 is replaced by sensor devices, so that disaster information can be sent directly to the disaster information estimating means 2102 without disaster information inputting post intervention.

If, for example, an earthquake recorder system is used as the disaster information input means, disaster information is at least a set of seismic intensity information, location information and observation day and time.

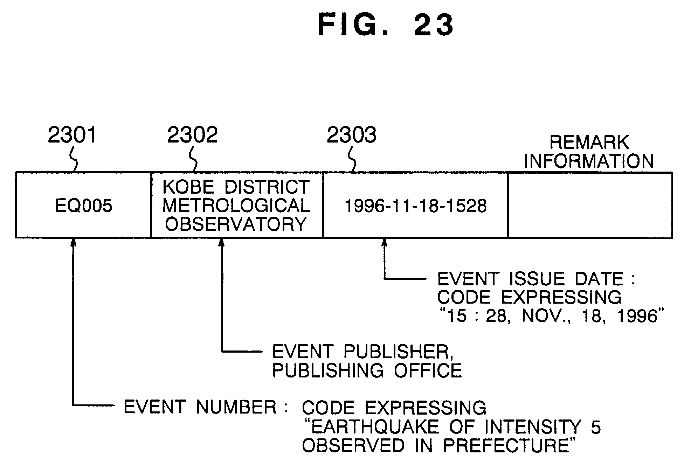

Fig. 23 shows one example of event information in that case.

In Fig. 23, a first column 2301 has a code of EQ005 provided to represent the event of "an earthquake of intensity 5 observed in a prefecture", a second column 2302 has a train of characters, "Kobe district meteorological observatory" provided as the location of event, and a third column 2303 has a series of numbers, "1996-11-18-15" provided to represent the time of event occurrence (at 15:00 hours, Nov. 18, 1996).

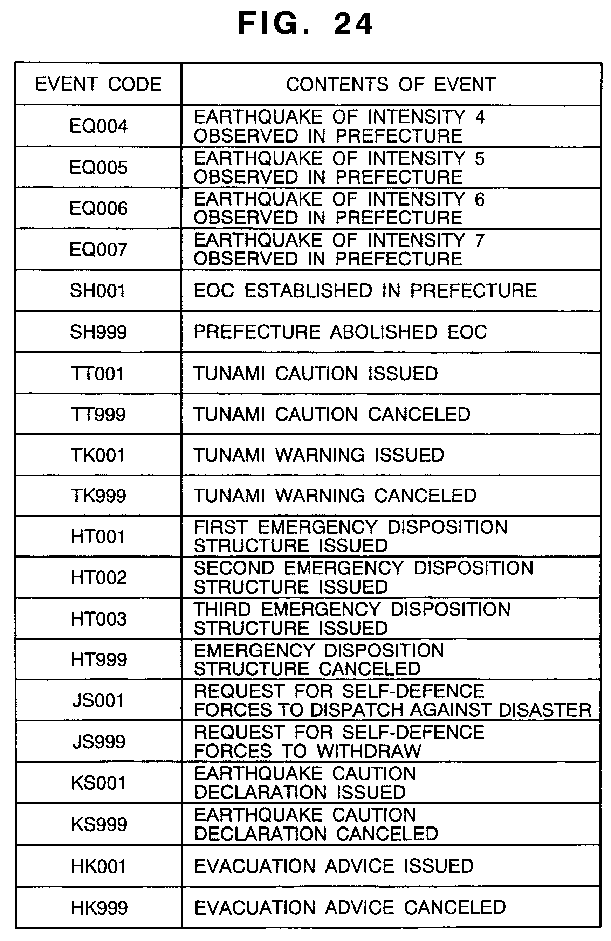

Also, Fig. 24 is a list of event (disaster information) code and event contents.

In Fig. 24, for example, the code of "EQ004" corresponds to the event contents "an earthquake of intensity 4 observed in a prefecture".

In this way, disaster information is transmitted through network communication means to the disaster information estimating means 2102.

If disaster information to be transmitted is not sent due to various kinds of causes such as inefficient handling in a disaster information inputting post and abnormal operation of disaster information input means 2101, the disaster information estimating means 2102 estimates the disaster information which has been lost, on the basis of received disaster information, the knowledge associated with the previously inputted disaster information, and the past disaster cases, and complements that. The detailed operation of this disaster information estimating means 2102 will be described later.

Here, first of all, it is assumed that there was no information to be implemented in disaster information shown in Fig. 23, and that the disaster information issued from the disaster information input means 2101 is directly sent to the decision support information providing means 2103.

The decision support information providing means 2103 searches the emergency operation rule group stored in the emergency operation rule memory means 2107 on the basis of the disaster information sent from the disaster information estimating means 2102 and the instruction information sent from the instruction execution means 2106, extracts a rule associated with the present disaster situation from the group, determines the options for action from the described action contents of the extracted rule, and decides support information from the described, provided information of the extracted rule.

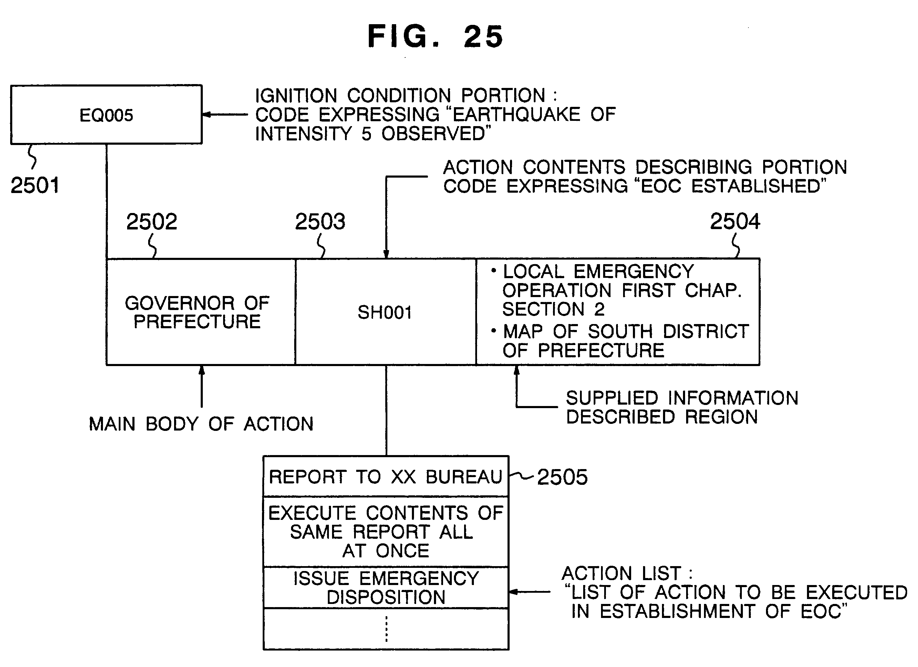

Fig. 25 shows one example of this emergency operation rule. The rule shown in Fig. 25 includes the contents that the governor is recommended to establish an Emergency Operation Center and the information to which reference should be made when an earthquake of intensity 5 is observed. In other words, an ignition condition portion 2501 has a code of "an earthquake of intensity 5 observed", an action main body 2502 has "governor", a described action contents portion 2503 has "Emergency Operations Center established", and a described provided information portion 2504 has codes of "written local emergency operation, first chapter, second item" and "map of south area of a prefecture".

Therefore, the operator's action has options of if "governor" agrees with "establish Emergency Operations center".

In addition, an action list portion 2505 associated with the described action content portion 2503 has "list of action to be taken for establishing Emergency Operations Center".

The output means 2104 is formed of a general display output device such as a CRT or liquid crystal display, and serves to display the options of action and support information produced from the decision support information providing means 2103. The operator makes decision with reference to the support information displayed on this output means 2104, and selects necessary actions from the options of action.

The data selected by the operator and to indicate actions are inputted by the operator through the instruction input means 2105 such as a keyboard or mouse and sent to the instruction execution means 2106.

In this example, the operator, or "governor" decides that "establish Emergency Operations Center" is necessary with reference to "written local emergency operations, first chapter, second item" and "map of south area of prefecture". As a result, it is assumed that "establish Emergency Operations Center" is decided, and inputted through the instruction input means 2105.

Thus, the instruction execution means 2106 extracts the information for realizing the inputted information of "establish Emergency Operations Center", and supplies it to the decision support information providing means 2103. Accordingly, in this case, the instruction execution means 2106 takes out "list of actions to be taken for establishing Emergency Operations Center" written in the action list portion 2505 of the emergency operation rule shown in Fig. 25, and supplies it to the decision support information providing means 2103.

As a result, the decision support information providing means 2103 forces the output means 2104 to display information of "inform XX bureau", "execute the information at the same time", "issue emergency disposition" and so on as reference information for emergency operation action or the support information of options on the basis of the action list received from the instruction execution means 2106.

Therefore, according to the embodiment shown in Fig. 21, the accurate support information fitted to the disaster condition can be provided to the operator, and consequently the decision making work of the operator at the time of disaster can be supported exactly.

The disaster information estimating means 2102 will be described in detail.

First, the ignition condition describing portion 2501 of the emergency operation rule shown in Fig. 25 corresponds to the IF portion in the IF-THEN form.

In Fig. 25, although the code of "an earthquake of intensity 5 observed" is written as a predicate, or a sentence, this ignition condition describing portion 2501 is more generally described in a logic form in which a plurality of predicates are connected by logic operators of "and" and "or".

If the ignition condition describing portion 2501 has a logic expression of

(EQ006 or EQ007) and TK001, this expression will be found to be the condition that "an earthquake of intensity 6 or 7 has been observed, and a tsunami warning issued in a prefecture" from the event code shown in Fig. 24.

Thus, the decision support information providing means 2103 evaluates this logical expression, and if the logical values are true, it evaluates the action main body and the following, of the emergency operation rule, and acts to provide support information.

By the way, in order that the decision support apparatus can properly operate, it is necessary that the disaster information input means 101 perfectly function and that all disaster information (in the previous example, EQ006, EQ007, TK001) be accurately transmitted to the decision support information providing means 2103.

However, in an emergency such as disaster, all information are not surely sent to the decision support information providing means 2103, or part thereof may be lost as described above.

If, in the above example, the information of the condition, or situation corresponding to TK001 occurring is not transmitted to the decision support information providing means 2103 due to a trouble in the communication network, the condition portion of the emergency operation rule is not indefinitely satisfied, and thus it is difficult to provide accurate support information according to the disaster condition to the operator, causing a great problem in crisis management.

Thus, according to the invention, to solve this problem, the disaster information estimating means 2102 is provided between the disaster information input means 2101 and the decision support information providing means 2103 as shown in, for example, Fig. 21.

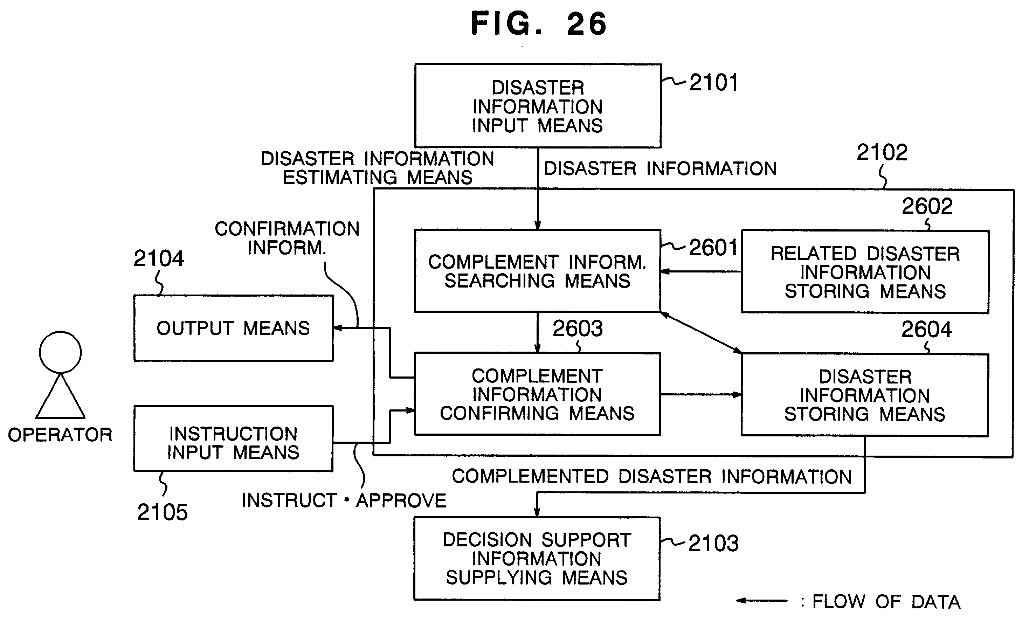

Fig. 26 shows a detailed construction of this disaster information estimating means 2102. As illustrated, this disaster information estimating means 2102 includes a complemental information searching means 2601, a related disaster information memory means 2602, a complemental information confirming means 2603, and a disaster information memory means 2604.

First, the complemental information searching means 2601, when receiving disaster information from the disaster information input means 2101, acts to search for information associated with the received disaster information in accordance with the information stored in the related disaster information memory means 2602.

The related disaster information memory means 2602 acts to store related disaster information.

Here, this related disaster information is information of disaster which can be considered to most probably occur at the same time as when certain disaster information is generated, on the basis of the past actual examples of disaster and the knowledge which the operator has.

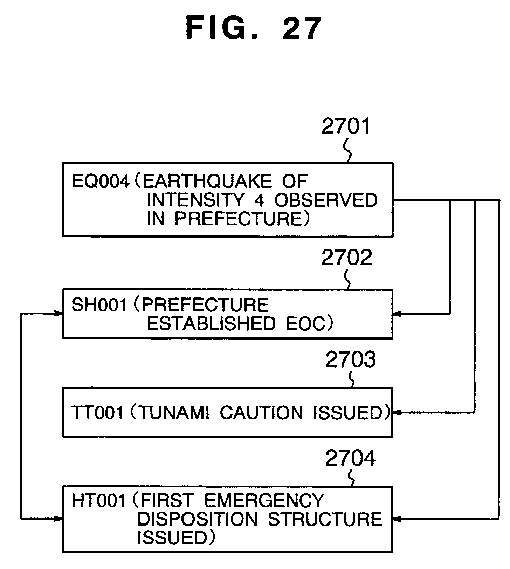

This related disaster information is generally an empirical rule that is not defined definitely in the emergency operation rule. As for example shown in Fig. 27, rectangles 2701, 2702 represent disaster information (events), and the arrow connecting these rectangles can indicate the interrelation between events as a model.

In this model shown in Fig. 27, if the event EQ004 "an earthquake of intensity 4 observed in prefecture" occurs as represented by rectangle 2701, SH001 "prefecture established Emergency Operations Center" represented by rectangle 2702, TT001 "tunami warning issued" represented by rectangle 2703, and HT001 "first emergency disposition structure issued" represented by rectangle 2704 are sequentially generated. This fact is assumed to be previously known from the past actual examples of disaster.

In addition, the model of Fig. 27 shows that SH001 "prefecture established Emergency Operations Center" represented by rectangle 2702, and HT001 "first emergency disposition structure issued" represented by rectangle 2704 often occur at the same time, and this fact is also determined from the past actual examples.

In this embodiment, this related disaster information memory means 2702 is constructed to have stored therein a set of a disaster information code and a code associated with that disaster information.

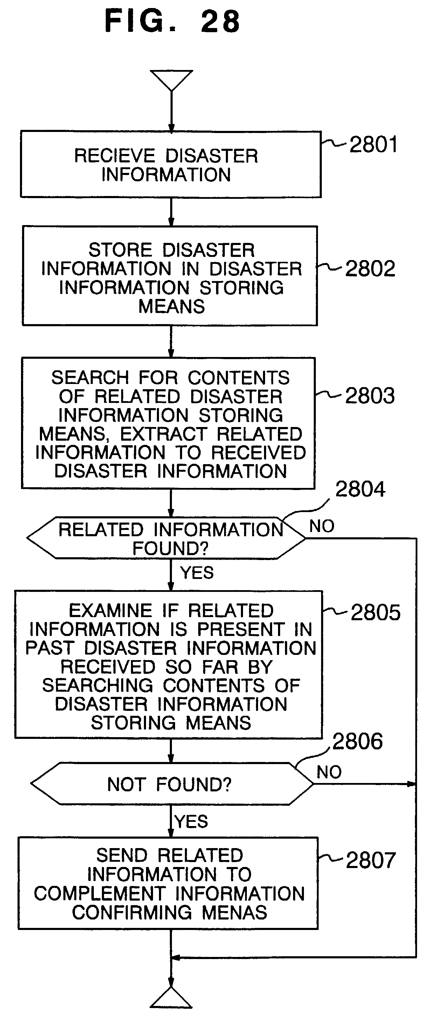

The process in the complementary information searching means 2601 will be described with reference to Fig. 28.

At step 2801, disaster information is received from the disaster information input means 2101, and at step 2802, this received disaster information is stored in the disaster information memory means 2604.

Here, the received disaster is assumed to be, for example, SH001 "prefecture established Emergency Operations Center" represented by rectangle 2702.

At step 2803, the contents (Fig. 27) of the related disaster information memory means 2602 is searched, and information associated with that disaster information, or HT001 "first emergency disposition structure issued" represented by rectangle 2704 is extracted which is associated with the information SH001 "prefecture established Emergency Operations Center" represented by rectangle 2702.

At step 2804, decision is made of whether related disaster information is extracted or not. In this example, related information is extracted, or the decision is Yes.

At step 2805, the disaster information memory means 2604 is searched so that examination is made of if disaster information of HT001 "first emergency disposition structure issued" that is associated with the received information is present within the received information up to that time.

At step 2806, decision is made of whether related disaster information is present within the disaster information memory means 2604. In this example, it is assumed that the related disaster information, HT001 "first emergency disposition structure issued" is not present within the disaster information memory means 2604.

At step 2807, related information, or in this example, HT001 "first emergency disposition structure issued" is sent to the complementary information confirmation means 2603.

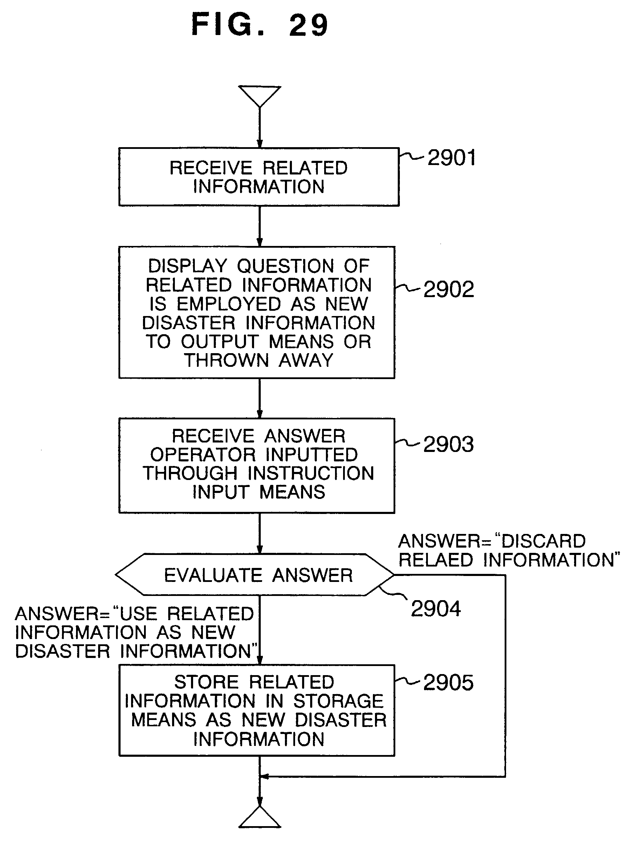

The complementary information confirmation means 2603 inquires the operator about whether or not the related disaster information extracted by the complementary information searching means 2603 should be registered as new information. This process will be described with reference to Fig. 29.

First, at step 2901, the related disaster information, or HT001 "first emergency disposition structure issued" is received, and at step 2902, the output means 2104 is forced to display the inquiry about whether the related information HT001 "first emergency disposition structure issued" is employed or not as new disaster information (fresh disaster information). At step 2903, the answer from the operator is awaited.

Thus, if the operator receives the inquiry, decides whether the related information is employed or not, and sends the answer through the instruction input means 2105, the answer from the operator is received at step 2903, and the program goes to step 2904.

At step 2904, the process branches according to the received answer. At step 2905, the received related information is stored in the disaster information memory means 2604 as new disaster information.

In the above embodiment, while the complementary information confirmation means 2603 inquires the operator about whether the related information is employed or not, the related information shown in Fig. 27 may have, for example, degree of confidence introduced, and if the degree of confidence is 80% or above, the received related disaster information is readily stored in the disaster information memory means 2604 as new disaster information without inquiring the operator.

In this case, the relation between disaster information such as "if Emergency Operations Center has been established, and an evacuation advice issued, the possibility of the Disaster Relief Act being invoked is 70%" may be expressed in a rule form with degree of confidence. In this case, the process can be automatically performed in accordance with the disaster condition.

Here, while the interrelation between disaster information in the model shown in Fig. 27 is only described in one-to-one relation, it may be described in one-to-plural, plural-to-one or plural-to-plural relation.

Another embodiment will be described, in which the related disaster information to be stored in the related disaster information memory means 2602 is produced from the past actual examples of disaster.

In general, the related disaster information of the form shown in Fig. 27 cannot be easily produced.

Thus, in the embodiment which will be described below, the history of disaster information in the past actual disasters is stored in the related disaster information memory means 2602, thus making it easy to produce the related disaster information.

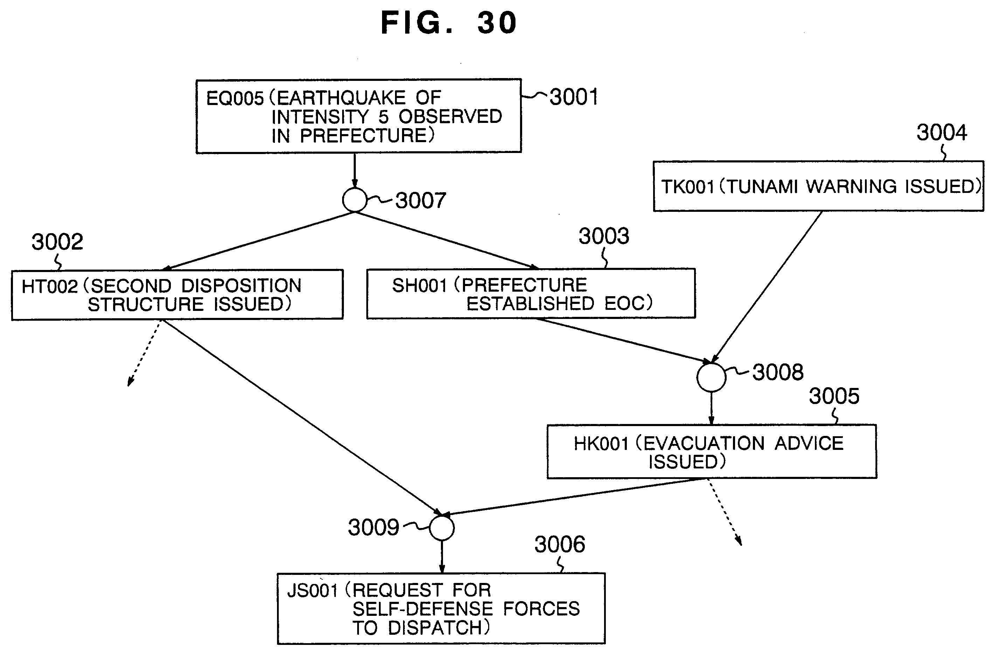

Fig. 30 shows one example of the model in which the history of disaster information in the past actual disasters is expressed.

In Fig. 30, rectangles 3001 to 3006 represent disaster information (events) generated outside or inside the decision support apparatus for emergency operations, circles 3007 to 3009 represent the timing of processing the disaster information, and arrows represent flow of information. The whole elements makes a disaster information network.

From Fig. 30, it will be understood that decision making or automatic processing is made at timing 3008 on the basis of disaster information SH001 "prefecture established Emergency Operations Center" represented by rectangle 3003 and disaster information TK001 "tunami warning issued" represented by rectangle 3004, thus disaster information "evacuation advice issued" of rectangle 3005 being generated.

As described above, since the history of disaster information is stored in the related disaster information memory means 2602 in the form of disaster information network, if the disaster information "evacuation advice issued" of rectangle 3005, for instance, is inputted in the complementary information searching means 2601, this complementary information searching means 2601 traces the basic conditions in which this disaster information 3005 was generated, thus making it possible to suppose the presence of disaster information EQ005 "an earthquake of intensity 5 observed in prefecture" of rectangle 3001, SH001 "prefecture established Emergency Operations Center" of rectangle 3003, and TK001 "tunami warning issued" of rectangle 3004 on the basis of that information. In addition, disaster information HT002 "second emergency disposition structure issued" of rectangle 3002 can be supposed to be generated from disaster information EQ005 "an earthquake of intensity 5 observed in prefecture" of rectangle 3001.

If any one of the predicted disaster information is not present within the disaster information memory means 2604, this information is decided to be probably lost, and this fact is sent to the complementary information confirmation means 2103.

Therefore, the disaster information estimating means 2102 is able to specify the disaster information to be complemented on the basis of the history of the past disaster information.

The event network shown in Fig. 30 includes both the relation of cause and effect between the disaster information written in the emergency operation rule, and that between the disaster information suggested from the past actual disaster examples which is not specified in the emergency operation rule.

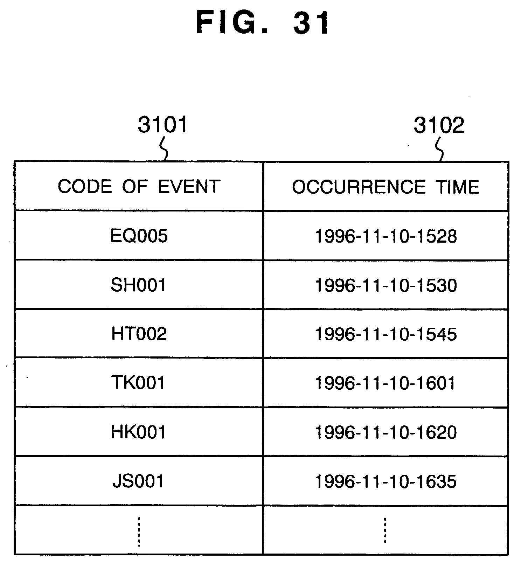

Here, to facilitate the production of related disaster information, the disaster information occurred in the past actual disasters may be listed with respect to time as shown in Fig. 31.

In other words, as shown in Fig. 31, the generated disaster information are given in pairs of event codes 3101 and disaster information occurrence time 3102.

For example, the event code EQ005 is found from Fig. 11 to be "an earthquake of intensity 5 observed in prefecture", and the occurrence time as part of the pair is expressed in a train of characters "1996-11-10-1528" which means 15:28, Nov. 10, 1996.

Thus, a plurality of disaster information in the past actual disasters are stored in the related disaster information memory means 2602, and the complementary information searching means 2601 makes several-variables analysis (correlation analysis) based on these information, thereby numerically expressing the strength of the correlation between disaster information. Thus, the lost disaster information can be estimated from the numerical results.

It is now assumed that a list of a plurality of events with respect to time is given, and that our attention is directed to two events A, B thereof in order to examine the interrelation between the events A, B.

In addition, it is assumed that there is no orderly relation between the events A, B if the events A, B occur in the order of A → B and B → A at equal frequency.

If the events A, B occur only in the order of A → B, it can be supposed that the event B will occur after event A with a direct or indirect orderly relation.

Thus, when the occurrence order is A → B, B → A and only A or B occurs, marks are provided 1 point, -1 point and 0 point, respectively, so that the average values $AVE_{(A-B)}$ of points are calculated for N lists of event occurrence with respect to time.

$$AVE_{(A-B)} = \text{(sum total of points of N lists)}/N$$

Here, as the average $AVE_{(A-B)}$ approaches to 1, the correlation of A → B is stronger. If the average $AVE_{(A-B)} = 0$, there is no correlation between events A, B. As the average $AVE_{(A-B)}$ approaches to -1, the correlation of B → A is stronger.

Thus, it is now assumed that the average value between events A, B is given as, for example,

$$AVE_{(A-B)} = 0.99$$

which is a high probability, and occurrence of event A is not reported yet, but occurrence of event B is reported.

In this case, it can be supposed that the occurrence of event A is not reported because of any trouble though event A occurs at high probability.

Thus, the complementary information searching means 2601 can be forced to execute necessary procedures for the above process.

Since many specific methods other than the above are known for the several-variables analysis, an appropriate technique may be used, and the present invention is not limited to the methods in the above embodiments.

According to the invention, even though disaster information is not obtained due to any trouble, the lost disaster information can be estimated on the basis of the past actual disasters and empirical knowledge, and a proposed action procedure exactly fitted to the disaster condition can be presented to the operator.

Thus, according to the invention, the operator can select an action procedure while referring to the output from the apparatus, and input an instruction through the input means so as to quickly and accurately take measures against a disaster.

In addition, when error is included in disaster information, it is necessary to remove the error information, and decide emergency operation items.

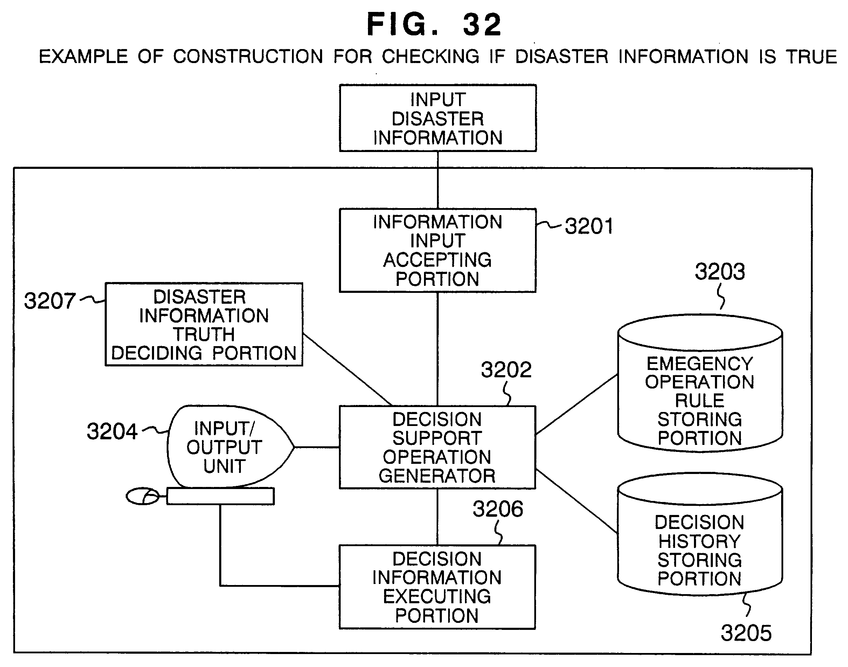

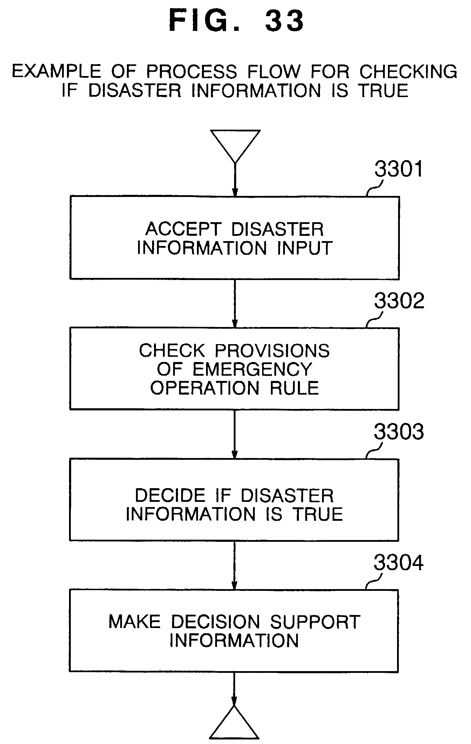

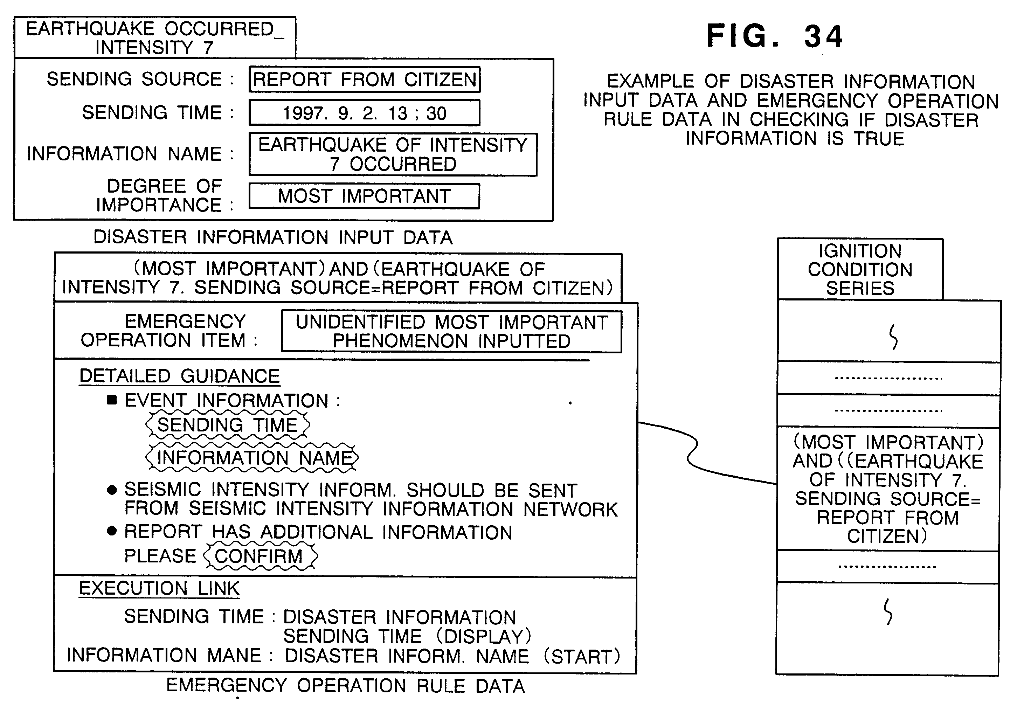

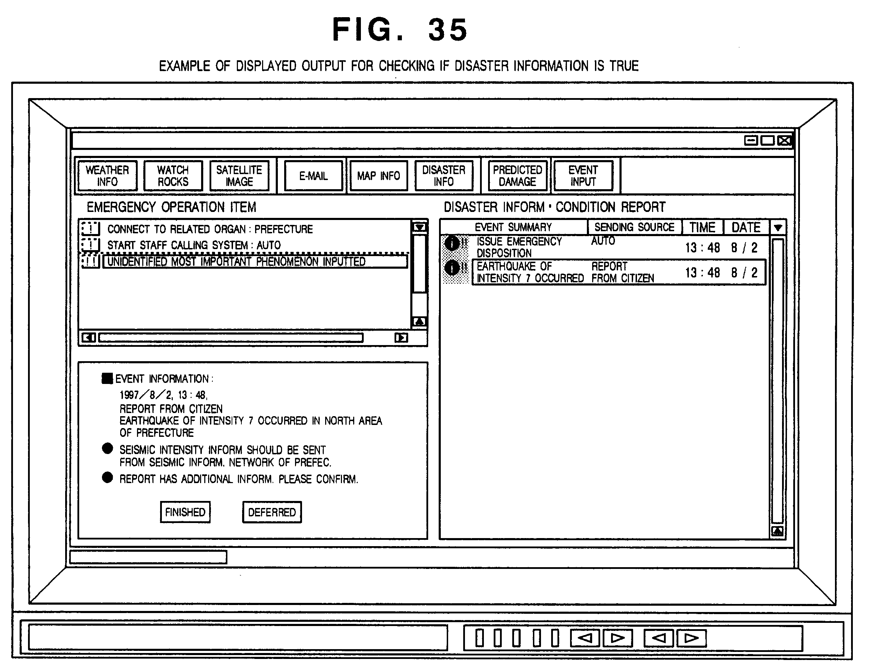

Fig. 32 shows another embodiment of the invention in which decision is made of whether the inputted disaster information contradicts the emergency operation rule and history information or not, or whether the contents of the inputted disaster information satisfy the emergency operation rule or not, to thereby determine the degree of truth to disaster information, and decision support information is generated according to the degree of truth. Fig. 33 shows the process flow. When an information input accepting portion 3201 accepts a disaster information input (at step 3301), a disaster information truth deciding portion 3207 checks the emergency operation rule (at step 3302), decides if the disaster information is true (at step 3303), and a decision support information generator 3202 produces decision support information according to the decision result (at step 3304). Fig. 34 shows an example of the disaster information input data and emergency operation rule data for the case of deciding the degree of truth to the input information according to this embodiment. It is assumed that disaster information has a title of "an earthquake occurred_intensity 7", a sending source of "report from a citizen", and importance degree of "most important". In addition, it is assumed that when the importance degree attribute of disaster information, and the attribute of the sending source of title "an earthquake occurs_intensity 7" are "most important" and "report from a citizen" as the ignition condition of the emergency operation rule, respectively, the logical expression is " (most important) AND (an earthquake occurred_intensity 7. the sending source="report from a citizen")". The disaster information truth deciding portion 3207, when receiving the above disaster information, searches for the ignition condition "(most important) AND (an earthquake occurred_intensity 7. the sending source="report from a citizen")" (at step 3302) from the rule, decides that the information from a citizen is uncertain (at step 3303), and transfers the process to the decision support information generator 3202. The decision support information generator 3202 orders the input/output unit 3204 to produce the described contents of each part of the emergency operation rule as decision support information (at step 3304). Fig. 35 shows the displayed output according to this embodiment. As shown in Fig. 35, when the emergency operation rule includes the condition that volcanic information is decided to be true only if the sending source is a volcanological observatory, and that the other information is decided to be probably error, that is, the condition "(volcanic information) AND NOT (volcanic information, the sending source=volcanological observatory)", the disaster information of "smoke emitting from Mount Fugin" that is assumed to have been received is decided to be error because the sending source is the report from a citizen, and "uncertain most important phenomenon has occurred" is displayed in the window 32. In addition, the contents of the detailed guidance portion describing that it is uncertain information are displayed in the window 33. Thus, according to this embodiment, it is possible to prevent wrong measures based on erroneous information.

Moreover, it is necessary to provide various kinds of rules in order to cope with not only disaster but also various different conditions.

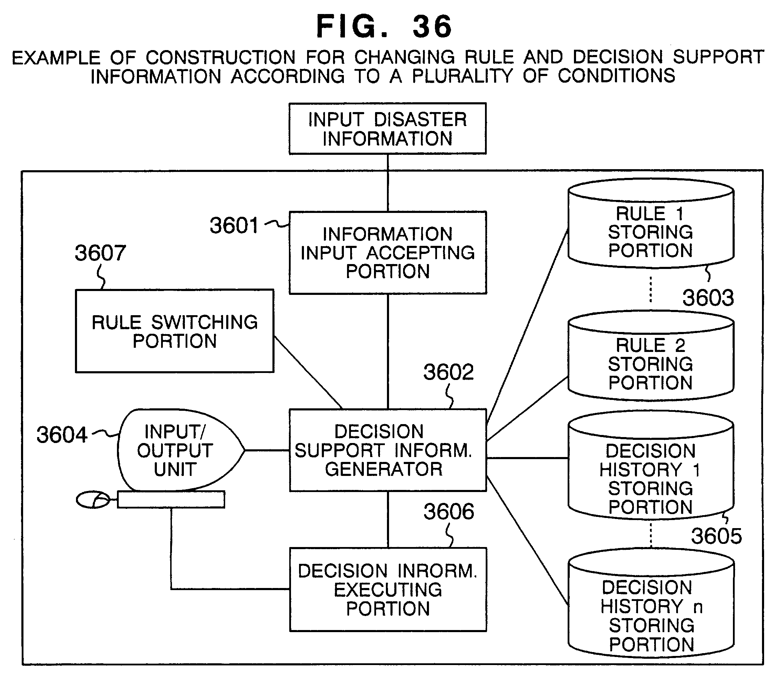

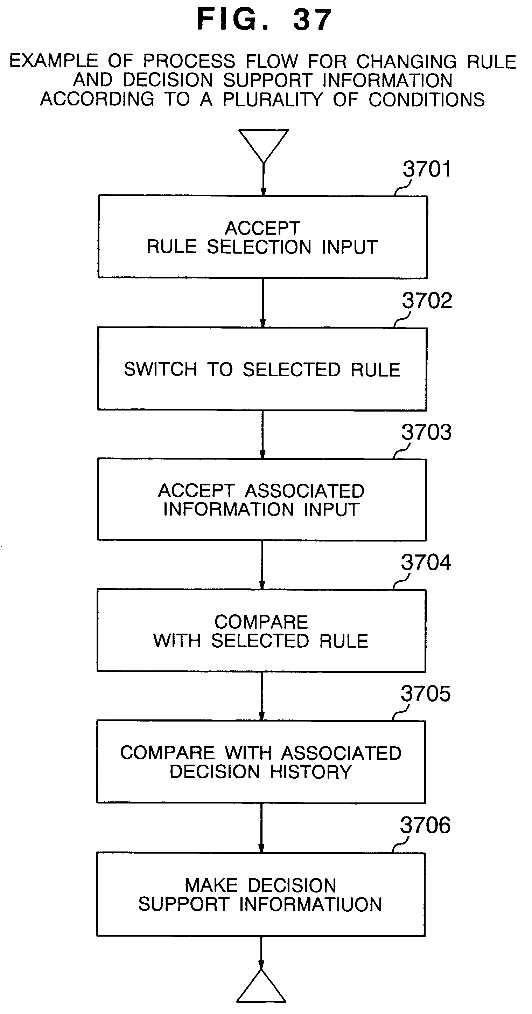

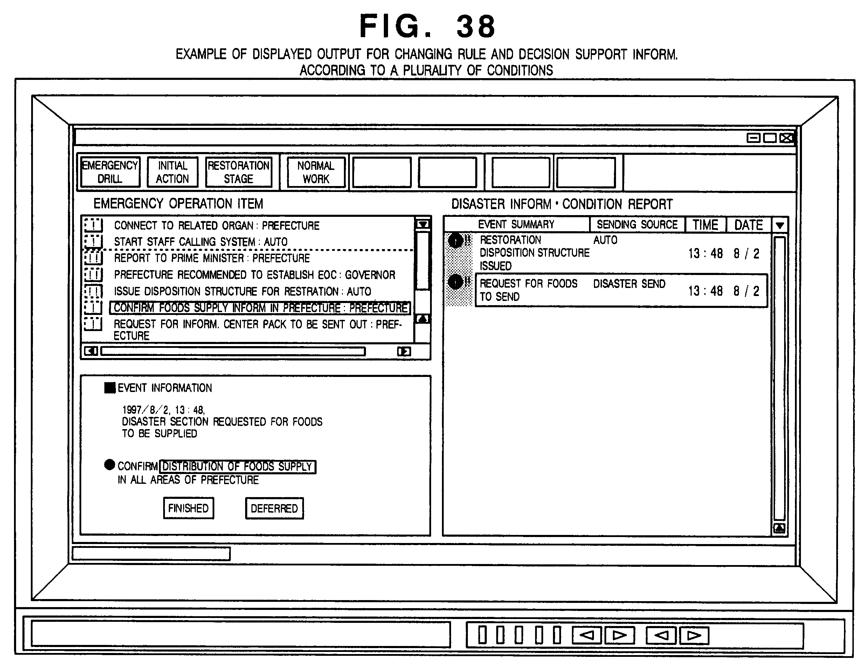

Fig. 36 shows the construction of another embodiment in which a plurality of rules are stored in the emergency rule memory means in order to cope with a plurality of conditions or situations such as an emergency drill, disaster occurrence initial action, restoration stage and ordinary work, including disasters, and the rule and decision support information are changed in accordance with those conditions. Fig. 37 shows the process flow. As illustrated in Fig. 36, the decision support apparatus has a plurality of rule memory portions 1 to n (3603), a plurality of decision history memory portions 1 to n (3605), a rule switching portion 3607 which accepts a rule selection input (at step 3701), and makes the selected rule active by switching (at step 3702), an information input accepting portion 3601 which accepts the information input associated with the selected rule (at step 3703), and a decision support information generator 3602 which compares it with the selected rule (at step 3704), compares the selected rule with the associated decision history of the decision history memory portion 3605 (at step 3705), and generates decision support information (at step 3706). Fig. 38 shows an example of the displayed output according to this embodiment. In Fig. 38, a plurality of different rules to be stored include a rule for emergency drill, a rule for disaster occurrence initial action, a rule for restoration stage and a rule for ordinary work. Each condition is selected by the selection button on the left-hand side. If the restoration stage is chosen, the message that restoration information of "request for aid to people falling short of foods", and "issue restoration disposition structure" at restoration stage has been inputted is selectively displayed in the window 31. If "request for aid to people falling short of foods" is selected, the associated operation items are displayed in the window 32. If "confirm goods distribution information in prefecture" is selected from the operation items, the procedure for the execution is displayed in the window 33. Thus, this embodiment makes it possible to use the apparatus at other times than disaster occurrence.

In addition, it is necessary to easily change/ generate the emergency operation rule according to the condition or situation.

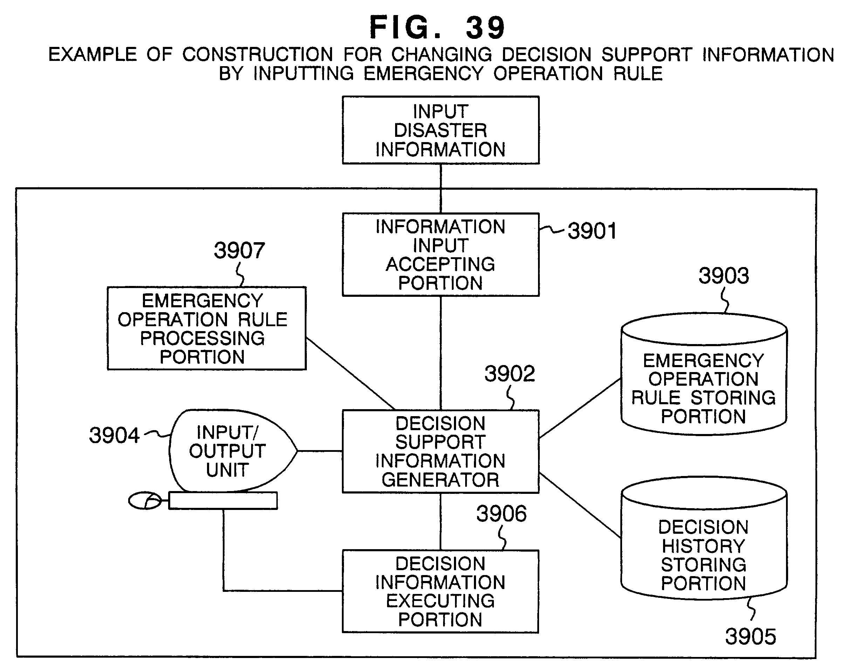

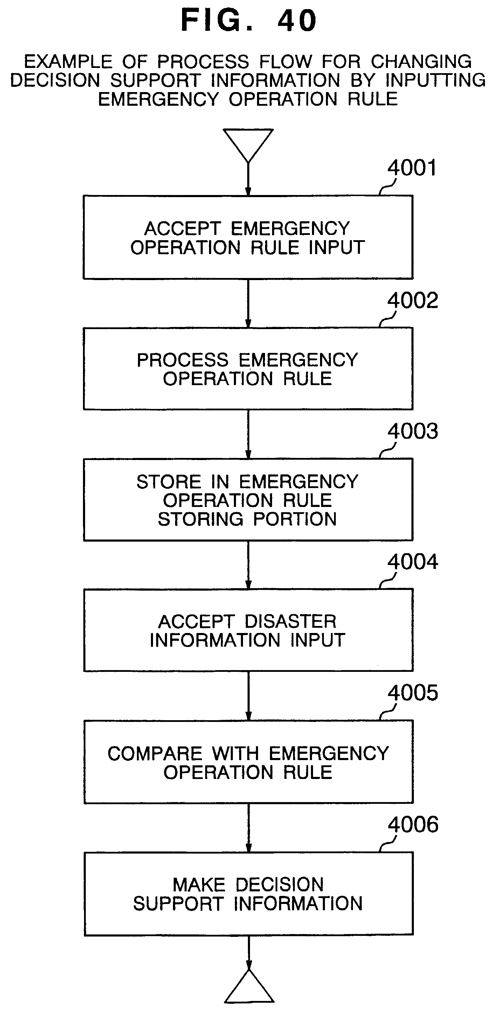

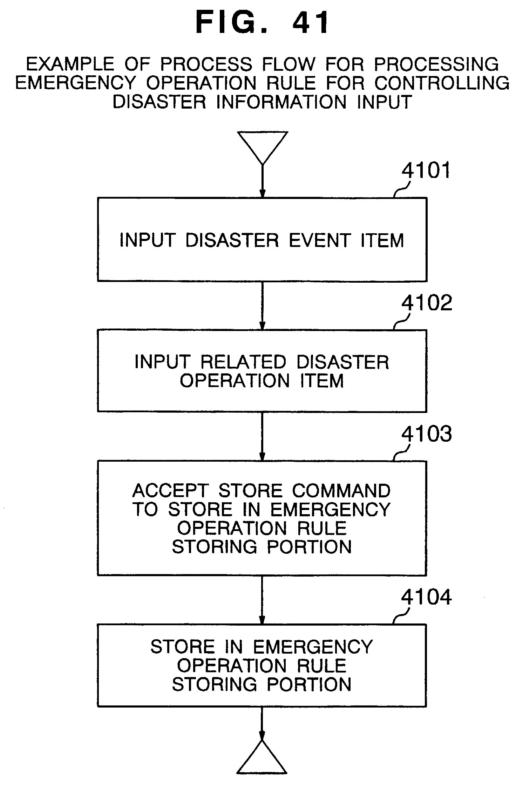

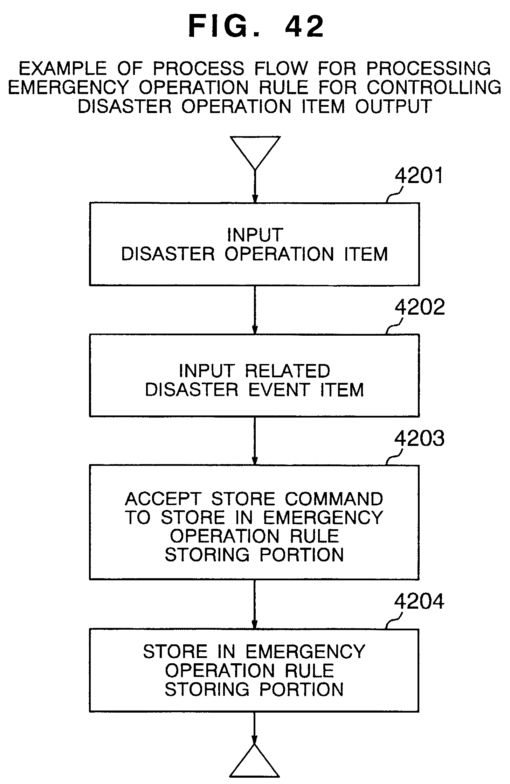

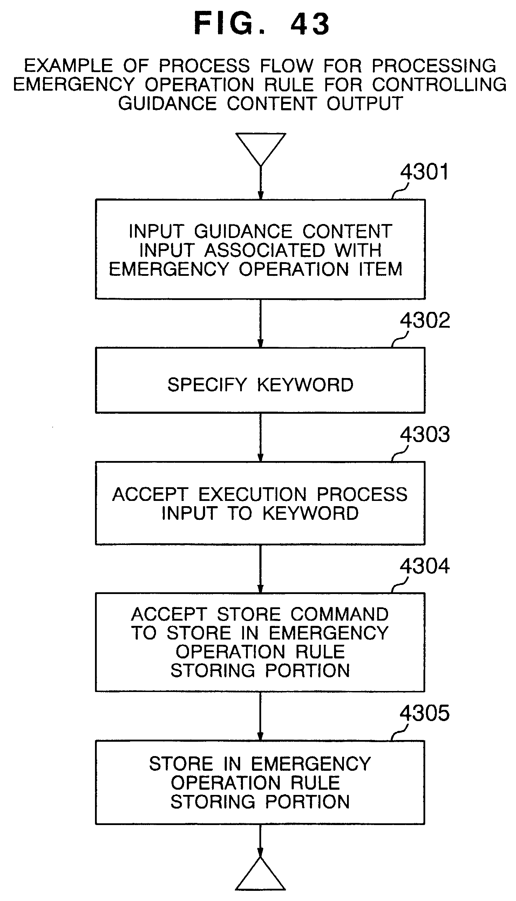

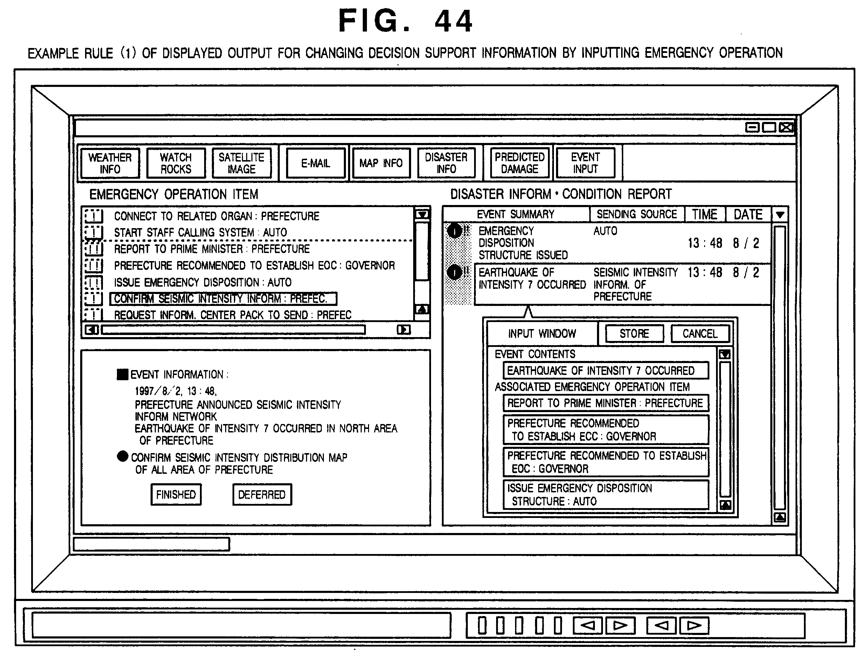

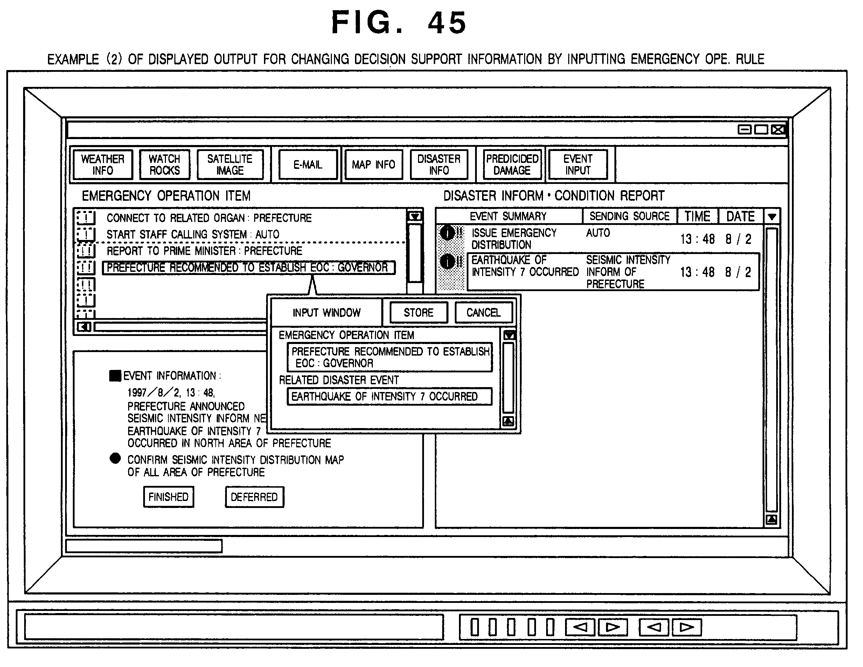

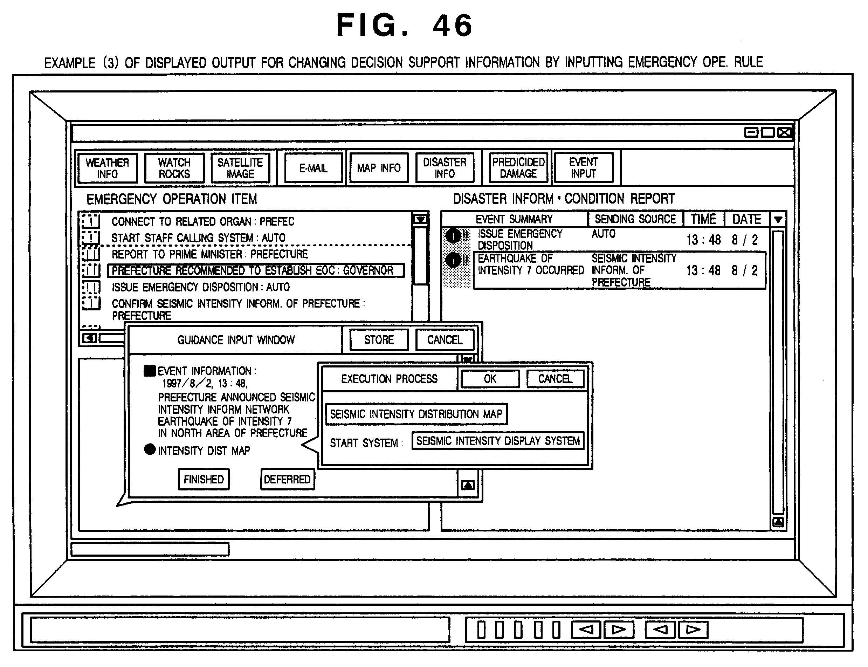

Fig. 39 shows another embodiment in which the decision support information to be generated can be dynamically changed by again storing new rules in place of the stored emergency operation rules. Fig. 40 shows the process flow. An emergency operation rule processing portion 3907 receives an emergency operation rule from an input/output unit 3904 (at step 4001), processes the emergency operation rule (at step 4002), and supplies the processed result to an emergency operation rule memory portion 3903 where it is stored (at step 4003). An information input accepting portion 3901 receives disaster information (at step 4004). A decision support information generator 3902 compares it with the processed rule (at step 4005), and generates decision support information (at step 4006). The step 4002 branches into a step of processing the emergency operation rule for controlling disaster information input, a step of processing the emergency operation rule for controlling emergency operation item output, and a step of processing the emergency operation rule for controlling guidance contents output in accordance with the contents displayed in the windows 31, 32, and 33. The process flows for those steps are shown in Figs. 41, 42 and 43, respectively. The examples of the display outputs associated with those flows are shown in Figs. 44, 45 and 46, respectively. After the emergency operation rule is received at step 4001, the user clicks, for example, the window 31 when the rule for controlling the disaster information input is processed, the window 32 when the rule for controlling the emergency operation item output is processed, and the emergency operation item when the rule for controlling the guidance content output is processed. When the user clicks those areas, input windows are displayed as in Figs. 44, 45 and 46, respectively. When the window 31 is clicked, a disaster event item input is accepted at step 4101 in Fig. 41 (in Fig. 44, the user types "an earthquake of intensity 7 occurred" into the event item field). At step 4102, the associated emergency operation item input is accepted (in Fig. 44, the user types into the associated emergency operation field). At step 4103, an order to store in the emergency operation memory portion is accepted (in Fig. 44, the user clicks the "store" button). At step 4104, the rule is stored in the emergency operation rule memory portion (as to the emergency operation rule data shown in Fig. 42, the contents typed into the event item field are stored in the ignition condition portion 511, and the contents typed into the associated emergency operation item field are stored in the emergency operation item 512). When the window 31 is clicked, at step 4201 in Fig. 42, the emergency operation item input is accepted (in Fig. 45, the user types "Emergency Operations Center recommended to be established: governor" into the emergency operation item field). At step 4202, the associated disaster event item input is accepted (in Fig. 45, the user types into the associated disaster event). At step 4203, an instruction to store in the emergency operation memory portion is accepted (in Fig. 45, the user clicks "store" button). At step 4204, the rule is stored in the emergency operation rule memory portion (as to the emergency operation rule data in Fig. 42, the contents typed into the associated disaster event field are stored in the ignition condition portion 511, and the contents typed in the emergency operation item field are stored in the emergency operation item portion 512). When the emergency operation item is clicked, at step 4301 in Fig. 43 the guidance contents input associated with the emergency operation item are accepted (in Fig. 46, the user types the guidance contents into the guidance input window). At step 4302, a command to specify a keyword is accepted (in Fig. 46, the user draws a band of "seismic intensity distribution map" by the mouse → specifies it by clicking or the like). At step 4303, a command to execute the process for a keyword is accepted (in Fig. 46, the user types into the start system field within the emergency operation execution processing window). At step 3404, a command to store in the emergency operation rule memory portion is accepted (in Fig. 46, the user clicks "store" button). At step 4305, the rule is stored in the emergency operation rule memory portion (as to the emergency operation rule data in Fig. 42, the contents typed into the guidance input window are stored in the detailed guidance portion 513, and the contents typed into the start system field are stored in the execution link portion 514 as "system name(start)"). By this embodiment, it is possible to effectively change/ generate the emergency operation rule.

In addition, a plurality of posts are sometimes established to take measures against the same disaster and operate while communicating with each other. In that case, it is necessary to reflect the decision making of other posts to that of own post.

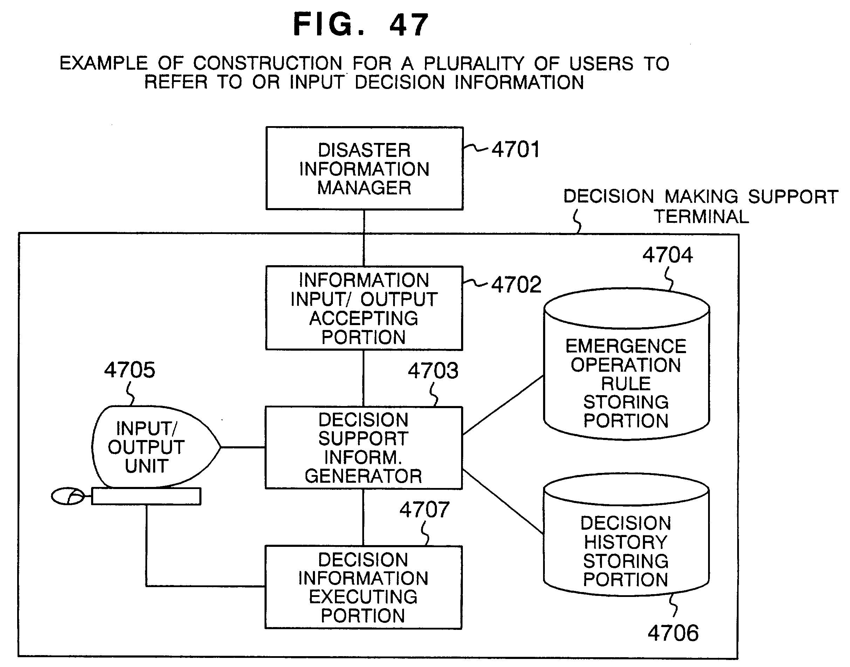

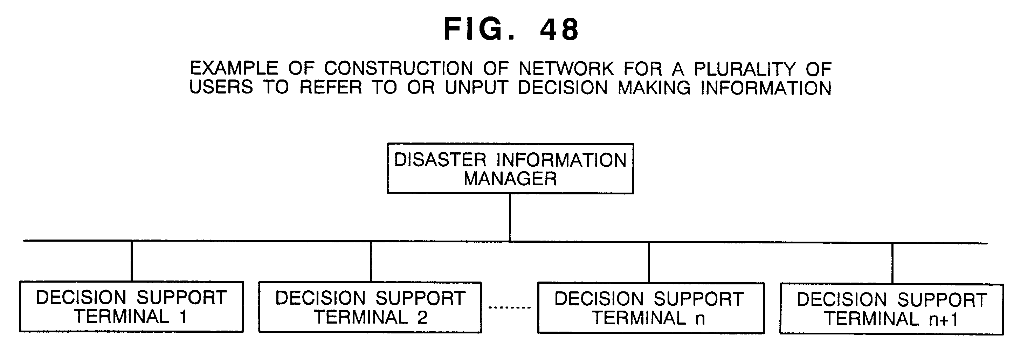

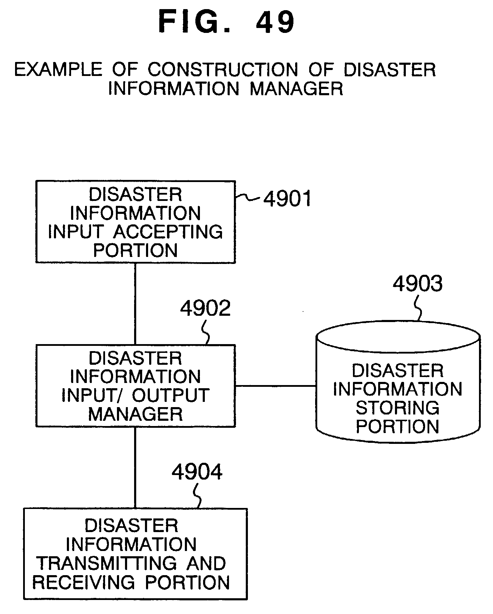

Fig. 47 shows the construction of another embodiment in which different emergency operation rules are stored in a plurality of emergency operation rule memory means so that decision support information are produced according to the respective emergency operation rules associated with disaster conditions and that decision making information is inputted, by a plurality of users according to the respective decision support information outputs. Fig. 48 shows an example of the network structure among a plurality of users. As illustrated in Figs. 47 and 48, a plurality of decision support terminals are connected to a disaster information manager 4701, and each terminal includes an information input/ output accepting portion 4702, a decision support information generator 4703, an emergency operation rule memory 4704 having stored therein an emergency operation rule fitted to its object of use, a decision history memory 4706 for storing its own decision history, a decision information executing portion 4707, and an input/ output unit 4705. Fig. 49 shows an example of the construction of the disaster information manager 4701. A disaster information input accepting portion 4901 is connected to a network and accepts a disaster information input. A disaster information transmitting and receiving portion 4904 is connected to the network, and transmits and receives information to and from the information input/ output unit 4702 of each decision support terminal. A disaster information input/output manager 4902 receives the information accepted by the disaster information input accepting portion 4701 or disaster information transmitting and receiving portion 4904 and supplies it to the disaster information memory 4703 where it is stored or reads disaster information from the disaster information memory 4703 in order for the disaster information transmitting and receiving portion 4904 to transmit it.

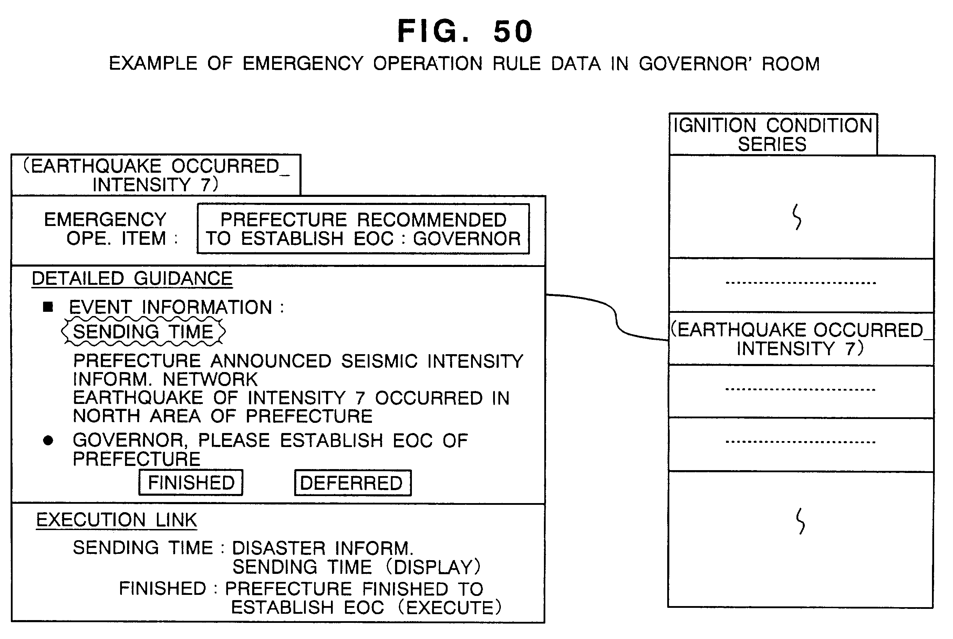

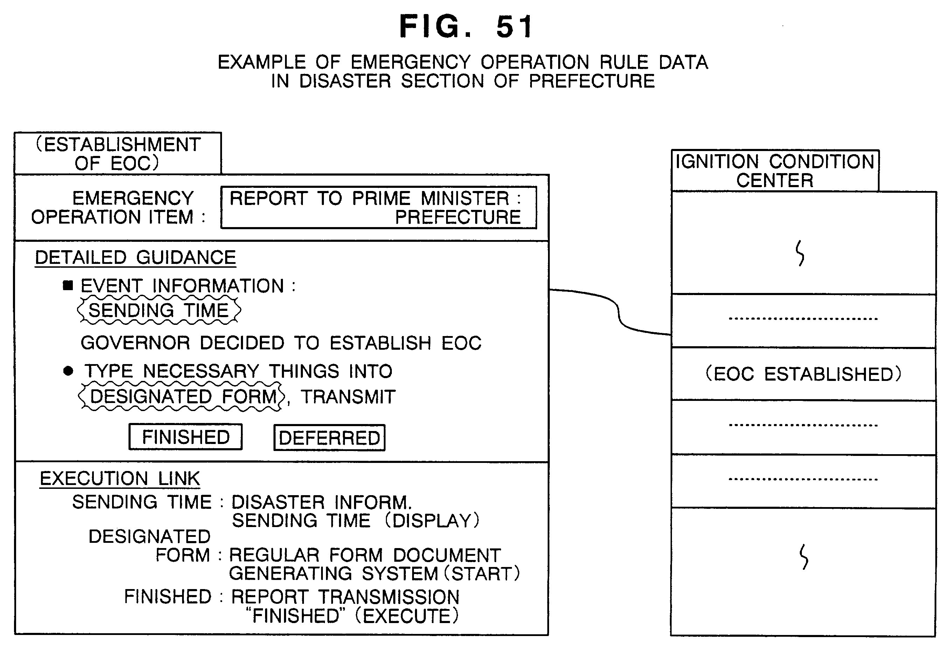

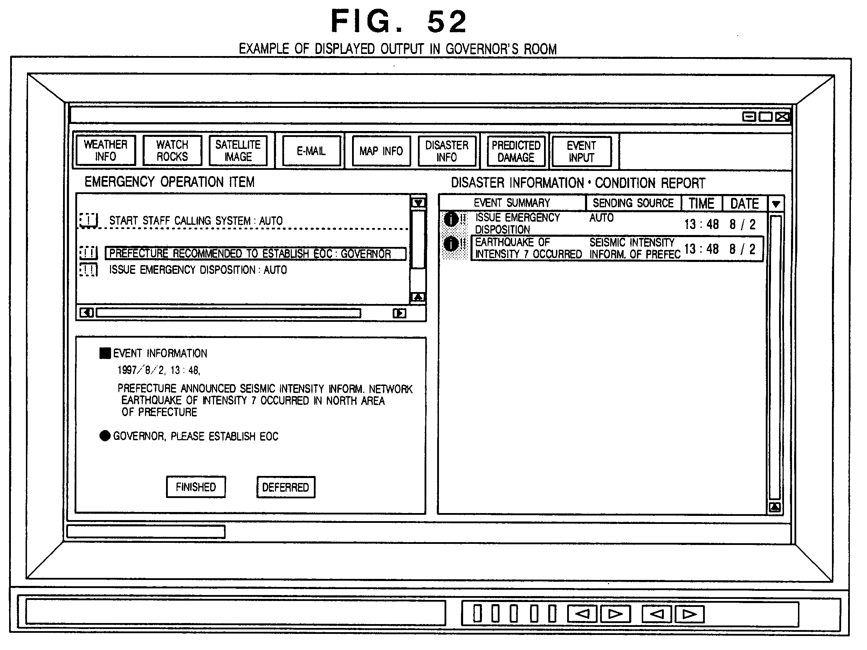

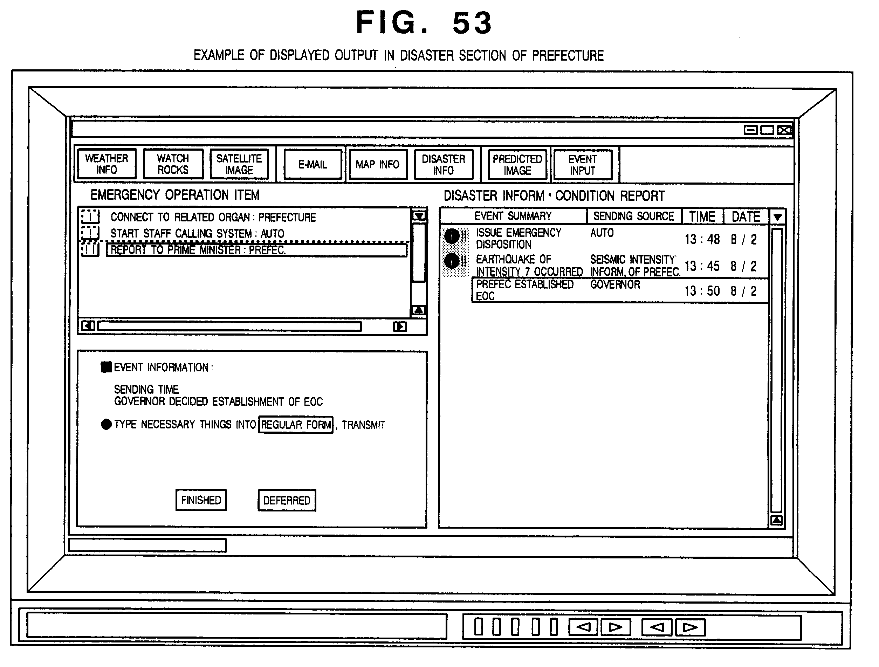

Figs. 50 and 51 show specific examples of emergency operation rule data at each post where this embodiment is used at its terminal in a governor's room and disaster prevention section of prefecture. Figs. 52 and 53 shows examples of the displayed outputs associated therewith. When a disaster information input "an earthquake of intensity 7 occurred" is accepted by the disaster information accepting portion 4901, the disaster information input/output manager 4902 supplies the disaster information data to the disaster information memory 4903 where it is stored, or supplies it to the disaster information transmitting and receiving portion 4904. The disaster information transmitting and receiving portion 4904 transmits the disaster information data "an earthquake of intensity 7 occurred" to each terminal. The information input/output accepting portion 4702 of each terminal receives this information. Each terminal then produces/ outputs decision support information according to the process shown in Fig. 2. In the governor's room, as shown in Fig. 50, the ignition condition series (an earthquake occurred_intensity 7) of the emergency operation rule is searched, and as shown in Fig. 52 the decision support information of "Prefecture recommended to established Emergency Operation Center" is displayed in each window in association with the emergency operation item and detailed guidance portion. When the governor selects "finished", distribution is executed of the prefectural Emergency Operations Center "settled" according to the description in the execution link portion, thus information being transmitted from the information input/output unit 4702 on the network. The prefectural Emergency Operations Center "settled" information is accepted by the disaster information transmitting and receiving portion 4904 of the disaster information manager 4701, and stored in the disaster information memory 4703. In addition, the prefectural Emergency Operations Center "settled" information is treated in the same way as is the disaster information input data, or transmitted from the disaster information transmitting and receiving portion 4904 to each terminal where the information input accepting portion 4702 receives it. If the terminal in a prefectural disaster prevention section accepts this information, as shown in Fig. 51 "(Emergency Operations Center)" is searched for from the ignition condition series, and as shown in Fig. 53 the emergency operation item and guidance are displayed in association with "prefecture established Emergency Operations Center". This embodiment is able to supply decision support information to each post as information matched to the decision making at different posts.

In addition, according to the invention, by providing meas for converting speech information to input data or speech recognizing means, it is possible for the user to select the event item in the window 31 or the emergency operation item in the window 32 or make access to the keyword within the window 33 by his speech. Thus, this embodiment can makes the user quickly operate the apparatus.

Moreover, if this invention has an Internet connector provided to connect the apparatus to the Internet, the information input accepting portion 111 or input/output unit 140 can be connected to the Internet so that disaster information and decision support information can be received and transmitted through the Internet, respectively. Thus, this embodiment can effectively execute the reception and transmission of information.

Also, this invention can incorporate each portion of the decision support apparatus 110 of Fig. 1 in a portable terminal. Thus, this embodiment makes it possible to carry the apparatus.

According to the invention, an input/output data converter can be provided to be connected to the information input accepting portion for receiving the disaster information and to the output portion for transmitting the decision support information. Thus, the data format from the external system can be converted into the data format which can be handled by the information input accepting portion or decision support information outputting portion. Therefore, the connection to the other systems can be easily performed.

According to the invention, when the input/output data converter is provided to be connected to the information input accepting portion or decision support information outputting portion, but when a certain data format of the external system cannot be converted to the data format which can be handled by the information input accepting portion or decision support information outputting portion, the name or data format of that system can be displayed. Thus, the connection to the other systems can be easily carried out.

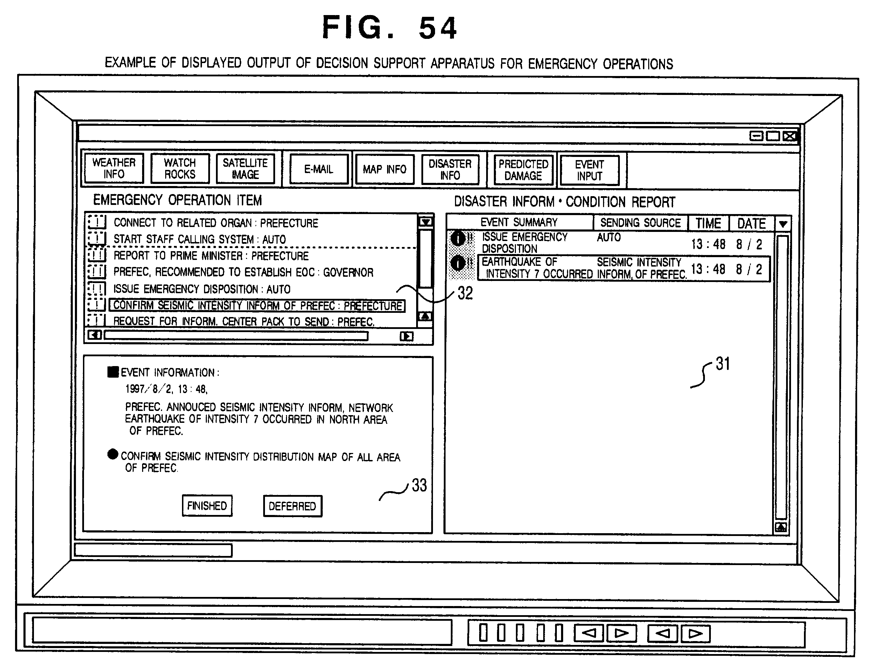

In addition, according to the invention, the emergency operation items displayed in the window 32 are a group for measures against each disaster information, and the output portion for outputting decision support information can transmit each information fitted to each group for measures. Fig. 54 shows an example of the displayed output according to this embodiment. Disaster information of "an earthquake of intensity 7 occurred" and "emergency disposition structure issued" are displayed in the window 31, and groups of measures are displayed in the window 32 with a line drawn to separate "report to the Prime Minister: prefecture" and "start staff call system: automatic" which are associated with those information. Thus, the correspondence between the disaster conditions and the measures against disaster can be easily seen from the windows.

According to the invention, information about the order of priority or degree of importance can be included in the disaster information and emergency operation items, so that the output portion for outputting decision support information can transmit information in the order of priority or degree of importance. Fig. 54 shows an example of the displayed output according to this embodiment. As illustrated in Fig. 54, symbol "!!", "!" is added to each item within the window 31 and window 32 in order to distinguish between "most important" and "important". Thus, effective emergency operations can be executed in the order of higher importance.

According to the invention, information about the order of priority or degree of importance can be included in the disaster information and emergency operation items, and the output portion for outputting the decision support information can switch the outputs in the order of priority or higher importance degree. Fig. 54 shows an example of the displayed output according to this embodiment. As shown in Fig. 54, symbol "!!", "!" is added to the front of each item within the window 32, and displayed in the order of higher importance degree within each group of measures. Thus, effective emergency operations can be executed in the order of higher importance degree.

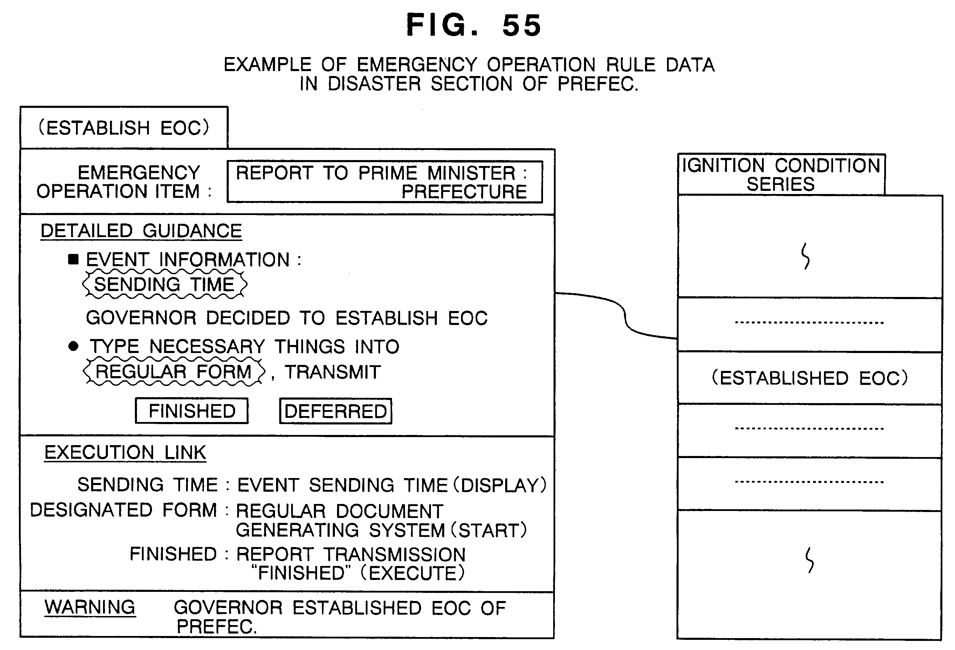

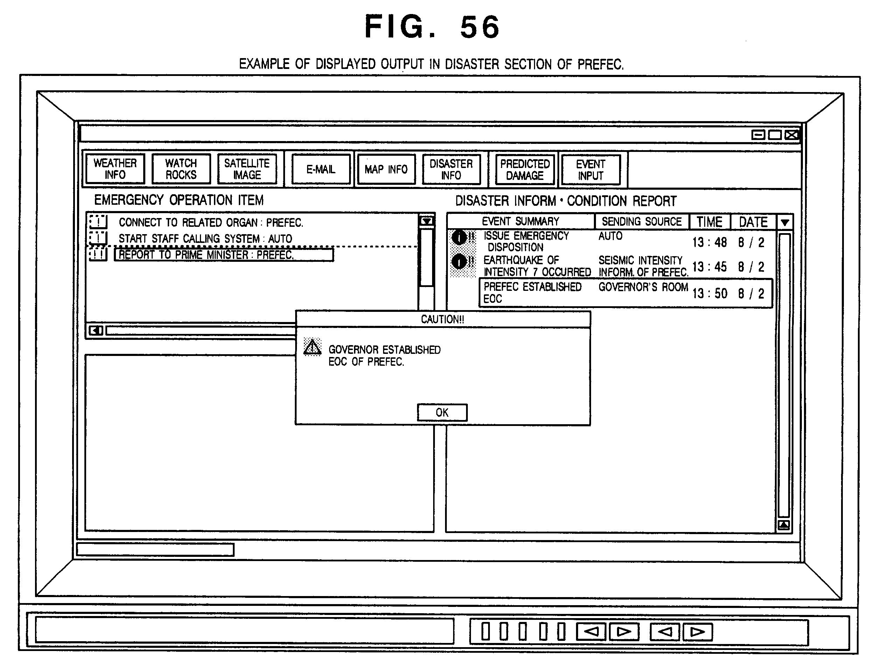

According to the invention, information about the order of priority or degree of importance, and warning information which is issued according to the disaster information input and the order of priority or degree of importance are included in the disaster information and emergency operation items (Fig. 55), so that when warning information is issued, the format of the warning information can be decided according to the external environment such as installation location or surroundings of the operator. Fig. 56 shows an example of the displayed output according to this embodiment. As illustrated in Fig. 56, symbol "!!", "!" for indicating the degree of importance is added to the front of each item within the emergency operation item window, and a warning window is displayed against the operator when there are emergency operation items about which measures are not taken yet and the degree of importance is "most important", and "important". Thus, measures against disaster with higher degree of importance can be taken without failure.

According to the invention, information about the order of priority or degree of importance is included in the disaster information and emergency operation items, so that the output portion for outputting decision support information can make the contents of measures or information about measures settled or not settled, and the order of priority or degree of importance be displayed on a map in icons. Thus, the history of measures taken can be understood at a glance.

According to the invention, information about the order of priority or degree of importance is included in the disaster information and emergency operation items, so that the output portion for outputting decision support information can cause the number of items being displayed to be limited according to the window size, order of priority or degree of importance or time. For example, as shown in Fig. 54, if the number of items being displayed is limited to 6 according to the size of the window 32, the last emergency operation item "request for information center pack to be sent out: prefecture" is deleted to disappear. Thus, the window can be prevented from being so crowded to be confused, and effective measures can be taken without oversight.

According to the invention, the decision support apparatus for emergency operations can be constructed as decision support apparatus for accomplishment of work which includes work rule memory means for storing work rule such as water service management rule or counter service work rule in a self-governing body, an information input accepting portion for receiving disaster information, decision history memory for storing decision history information already decided at the time of disaster, decision support information generator for producing decision support information on the basis of the work rule, the disaster information and the history information, and an output portion for outputting the decision support information. Thus, the apparatus according to the invention can be applied to other situations than disaster.

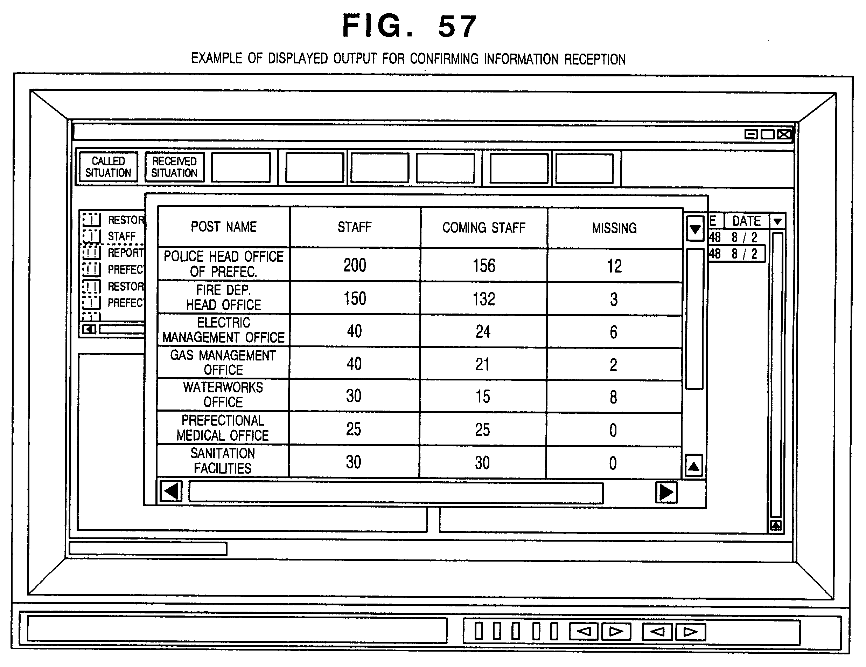

Since measures against disaster are taken at the time of disaster, the employees of the prefecture, for instance, are necessary to be called without delay. Fig. 57 shows an example of the displayed output for that case. Items "execute staff call", "situation of stall call" are included as emergency operation items of decision support information, so that the output portion for outputting decision support information can produce the situation of staff call. As illustrated in Fig. 57, the staff call situation (name of post, all the staff, rallying staffs, missing staffs) at each post is received as situation report, and the staff call situation at each post is displayed by clicking the call situation button on the upper left-hand side of the screen of the input/output unit. Thus, the situation in which stalls are called can be immediately grasped.

According to the invention, "make contact with all areas", "confirmation information about reception of emergent notice by each area" are included as disaster information items of decision support information, so that the output portion for outputting decision support information generates the confirmation information from each area. Thus, the situation in which information has arrived or not at the associated posts can be immediately grasped.

According to the invention, "make contact with all areas", and "information about connection/disconnection of communication channels to each area" are included as disaster information items of decision support information, so that the output portion for outputting decision support information can produce information about availability or unavailability of communication channels on the basis of the connection information from each area.

According to the invention, "traffic on channel to each area" is included as disaster information to be inputted, so that decision support information can be transmitted as option information on free channel based on the traffic.

According to the invention, the emergency operation rule can also be converted into a coded message, or a cryptogram, and stored, or the cryptographed disaster information input data can be accepted.

The apparatus according to the invention can also be used as an emergency drill simulator by receiving simulated disaster information input data.

## Claims

1. A decision support apparatus for emergency operations comprising:

   an emergency operation rule memory (120) for storing an emergency operation rule;
   an information input accepting portion (111) for receiving disaster information;
   a decision history memory (130) for storing decision history information already decided at time of disaster;
   a decision support information generator (112) for generating decision support information on the basis of said emergency operation rule, said disaster information and said history information; and
   a decision information executing portion (113) for executing said decision support information generated from said decision support information generator.

2. A decision support apparatus according to claim 1, wherein said decision support information is information of options for next actions to be taken at the time of disaster.

3. A decision support apparatus according to claim 1, wherein said decision support information is information of options for a person in charge to take next action at the time of disaster.

4. A decision support apparatus according to claim 1, further comprising an input portion (140) for receiving decision information based on said decision support information, said received decision information being stored in said decision history memory.

5. A decision support apparatus according to claim 1, wherein said decision support information generator has means for storing working hours of said person in charge and means for measuring time, and said decision support information generator generates staff calling request information as decision support information if the present time is out of the working hours of said person in charge;

6. A decision support apparatus according to claim 1, wherein said decision support information generator generates information of options for next action to be taken at the time of disaster on the basis of said emergency operation rule, said disaster information and said decision history information.

7. A decision support apparatus according to claim 1, wherein said decision support information generator dynamically changes information of recommended options for next action to be taken at the time of disaster on the basis of said emergency operation rule, said disaster information and said decision history information.

8. A method of supporting decision making for action to be taken at the time of disaster, comprising the steps of:

storing an emergency operation rule;
accepting an input of disaster information (201);
storing decision history information already decided at the time of disaster (202);
generating decision support information on the basis of said emergency operation rule, said disaster information and said history information; and
executing said decision support information.

9. A method of supporting decision making according to claim 8, wherein said decision support information is information of options for next action to be taken at the time of disaster.

10. A method of supporting decision making according to claim 8, wherein said decision support information is information of options for a person in charge to take next action at the time of disaster.

11. A computer-readable recording medium having stored therein an execution procedure for supporting decision making at the time of disaster, said procedure including the steps of:

accepting an input of disaster information;
generating decision support information on the basis of an emergency operation rule previously stored, said accepted disaster information and history information of decision making actually executed at the time of past disasters;
generating said decision support information;
accepting an input of actual decision making; and
storing said actual decision making as a decision history.

12. A computer-readable recording medium according to claim 11, wherein said decision support information is information of options for next action to be taken at the time of disaster.

13. A computer-readable recording medium according to claim 11, wherein said decision support information is information of options for a person in charge to take next action at the time of disaster.

# FIG. 1

DISASTER
INFORMATION INPUT

INFORMATION
INPUT ACCEPTING
PORTION — 111

DECISION
SUPPORT
INFORMATION
GENERATOR — 112

DECISION
INFORMATION
EXECUTING
PORTION — 113

— 110

INPUT/
OUTPUT
UNIT — 140

EMERGENCY
OPERATION
RULE STORING
MEMORY — 120

DECISION
HISTORY
STORING
MEMORY — 130

COMMUNICATION
EQUIPMENT — 150

DECISION SUPPORT
APPARATUS AT OTHER POST — 160

18

# FIG. 2

EXAMPLE OF PROCESS FLOW ACCORDING TO THE INVENTION

```
                    ( START )
                        │
201 ─┤ ACCEPT DISASTER INFORMATION INPUT │
                        │
202 ─┤ READ IN DECISION HISTORY │
                        │
203 ─┤ DISPLAY NEW HISTORY OR │
        DISASTER INFORMATION │
                        │
204 ─┤ SEARCH EMERGENCY OPERATION RULE │
                        │
205 ─< IGNITION CONDITION SATISFIED? >── NO
                       │ YES
206 ─┤ DISPLAY EMERGENCY  OPERATION │
        ITEM OF CORRESPONDING
        EMERGENCY OPERATION │
                        │
207 ─┤ ACCEPT SELECTED INPUT OF │
        EMERGENCY OPERATION ITEMS │
                        │
208 ─┤ DISPLAY DETAILED GUIDANCE │
        FOR SELECTED ITEM │
                        │
209 ─┤ ACCEPT EXECUTION │
        INFORMATION SELECTED INPUT
        OF DETAILED GUIDANCE │
```

210 — PROCESS ACCORDING TO EXECUTION LINK
(1) DISPLAY : DISPLAY PROCESS
(2) START   : START SYSTEM
(3) EXECUTE : STORE DECISION HISTORY

DISPLAY SPECIFIED INFORMATION IN DETAILED GUIDANCE

(1)

211

START SPECIFIED SYSTEM

212

(2)

(3)

213 — STORE DECISION HISTORY

214 —
(1) PROCESS END COMMAND INPUT ACCEPTED?
(2) EMERGENCY OPERATION ITEM SELECTION INPUT ACCEPTED?
(3) DISASTER IMFORNATION INPUT ACCEPTED?

(3) ACCEPTED          (2) ACCEPTED

(1) ACCEPTED

( END )

# FIG. 3

EXAMPLE OF DISPLAY OF DECISION SUPPORT APPARATUS FOR EMERGENCY OPERATIONS

EMERGENCY OPERATION ITEM

- CONNECTION TO RELATED ORGAN : PREFECTURE
- START STAFF CALLING SYSTEM : AUTO
- REPORT TO PRIME MINISTER : PREFECTURE
- EMERGENCY OPERATION CENTER RECOMMENDED TO ESTABLISH : GOVERNOR
- ISSUE EMERGENCY DISPOSITION : AUTO
- CONFIRM SEISMIC INTENSITY : PREFECTURE
- REQUEST FOR INFORMATION CENTER PACK TO SEND : PREFECTURE

DISASTER INFORMATION · CONDITION REPORT

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF SEIMIC INTENSITY 7 | SEIMIC INTENSITY INFORM. OF PRETEC. | 13 : 48 | 8 / 2 |

32

■ EVENT INFORMATION :

1997／8／2, 13 : 48,
SEISMIC INTENSITY INFORMATION NETWORK ANNOUNCED
EARTHQUAKE OF INTENSITY 7 OCCURRED IN NORTH AREA
OF PREFECTURE

● GOVERNOR ESTABLISH EMERGENCY OPERATIOON CENTER
ACCORDING TO PROVISION CHAP 2, SECTION 10 OF EMERGENCY
OPERATION RULE

| ACCOMPLISHED | | DEFERRED |

33

31

WEATHER INFO | WATCH ROCKS | SATELLITE IMAGE | E-MAIL | MAP INFO | DISASTER INFO | PREDICTED DAMAGE | EVENT INPUT

EP 0 849 693 A2

# FIG. 4

EXAMPLE OF DISASTER INFORMATION INPUT DATA

410

EARTHQUAKE OCCURRED_
INTENSITY 7  411

412

| | |
|---|---|
| SENDING SOURCE : | EARTHQUAKE INFORMATION NETWORK OF PREFECTURE |
| SENDING TIME : | 1997. 9. 2, 13 : 30 |
| INFORMATION NAME : | EARTHQUAKE OF INTENSITY 7 OCCURRED |

| | |
|---|---|
| SEISMIC CENTER : | NORTH AREA OF PREFECTURE |
| OCCURRENCE DATA : | 1997. 9. 2, 13 : 25 |

413

EVENT SERIES  420

| |
|---|
| ⸮ |
| ......................... |
| EARTHQUAKE OCCURRED_ INTENSITY 7̄ |
| HEAVY RAIN FLOOD WARNING ISSUED |
| ......................... |
| ⸮ |

421

EP 0 849 693 A2

# FIG. 5

EXAMPLE OF EMERGENCY OPERATION RULE DATA

# FIG. 6

EXAMPLE OF DECISION HISTORY DATA

610

**ISSUE EMERGENCY DISPOSITION STRUCTURE** — 611

612

| SENDING SOURCE : | AUTO |
|---|---|
| SENDING TIME : | 1997. 9. 2, 13 : 31 |
| INFORMATION NAME : | ISSUE EMERGENCY DISPOSITION STRUC. |

620

**PREFECTURE ESTABLISH EOC** — 621

| SENDING SOURCE : | GOVERNOR |
|---|---|
| SENDING TIME : | 1997. 9. 2, 13 : 45 |
| INFORMATION NAME : | PREFECTURE ESTABLISHED EOC : GOVERNOR |

622

600

**DECISION HISTORY SERIES**

⌇

.....................

ISSUE EMERGENCY DISPOSITION STRUCTURE

PREFECTURE ESTABLISHED EOC

.....................

⌇

611

EP 0 849 693 A2

# FIG. 7

EXAMPLE OF CONSTRUCTION IN IDENTIFYING PERSON IN CHARGE

# FIG. 8

EXANPLE OF PROCESS FLOW
IN IDENTIFYING PERSON IN CHARGE

801
READ OUT PRIVATE
INFORMATION DATA

802
COMPARE WITH STORED
PRIVATE INFORMATION DATA

803
COMPARE WITH EMERGENCY
OPERATION RULE

804
COMPARE WITH DECISION
HISTORY INFORMATION

805
MAKE DECISION SUPPORT
INFORMATION

# FIG. 9

EXAMPLE OF PRIVATE PERSON IDENTIFICATION DATA

**FULL NAME No.012345456**

| | |
|---|---|
| FULL NAME : | TARO YAMADA |
| OFFICIAL TITLE : | CHIEF OF DISASTER SECTION |
| AUTHORITY : | LEVEL 2 |

**HISTORY OF HIS HAVING OPERATED APPARATUS**

| | |
|---|---|
| FINISHED ITEM : | HE CONFIRMED SEISMIC PREFECTURE INTENSITY WITHIN : PREFECTURE |
| | HE REPORTED TO PRIME MINISTER : PREFECTURE |
| | ............................ |

**FULL NAME CODE STORING AREA**

| |
|---|
| ⌇ |
| ............................ |
| FULL NAME No.012345456 |
| ............................ |
| ............................ |
| ⌇ |

EP 0 849 693 A2

# FIG. 10

EXAMPLE OF EMERGENCY OPERATION RULE DATA
WITH AUTHORITY ADDED

（EARTHQUAKE OCCURRED_
INTENSITY 7）

| EMERGENCY OPERATION ITEM : | CONFIRM SEISMIC INTENSITY : PREFECTURE |
|---|---|

| POWER OF OPERATION | LEVEL 2 |
|---|---|

DETAILED GUIDANCE

■ EVENT INFORMATION :

〈SENDING TIME〉

PRERECTURE ANNOUNCED SEISMIC INTENSITY INFORMATION NETWORK

EARTHQUAKE OF INTENSITY 7 OCCURRED IN NORTH AREA OF PREFECTURE

● CONFIRM SEISMIC INTENSITY
〈MAP OF ALL AREA OF PREFECTURE〉

| FINISHED | DEFERRED |

EXECUTION LINK

SENDING SOURCE : DISASTER INFORMATION
SENDING TIME （DISPLAY）

SEISMIC INTENSITY : SEISMIC INTENSITY SYSTEM （START）
MAP

FINISHED : SEISMIC INTENSITY
INFORMATION "CONFIRMED" （EXECUTE）

# FIG. 11

EXAMPLE OF DISPLAYED OUTPUT FOR PRIVATE PERSON IDENTIFICATION

| WEATHER INFO | WATCH ROCKS | SATELLITE IMAGE | E-MAIL | MAP INFO | DISASTER INFO | PREDICTED DAMAGE | EVENT INPUT |
|---|---|---|---|---|---|---|---|

**EMERGENCY OPERATION ITEM**

CONNECTION TO RELATED ORGAN : PREFECTURE

START STAFF CALLING SYSTEM : AUTO

REPORT TO PRIME MINISTER PREFEC. RECOMMEND TO ESTABLISH

ISSUE EMERGENCY DISPOSITION STRUCTURE : AUTO          EOC
                                                  (FINISHED)

CONFIRM SEISMIC INTENSITY PREFE. (FINISHED)

REQUEST FOR INFORM CENTER PACK TO SEND PREFECTURE

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF INTENSITY 7 OCCURRED | SEISMIC INTENSITY INFORM.OF PREFECTURE | 13 : 48 | 8 / 2 |

■ EVENT INFORMATION :

1997／8／2, 13 : 48,

SEISMIC INTENSITY INFORM NETWORK ANNOUNCED EARTHQUAKE OF INTENSITY 7 OCCURRED IN NORTH AREA OF PREFECTURE

● CONFIRM SEISMIC INTENSITY DISTRIBUTION MAP OF ALL AREA OF PRE.

| FINISHED | DEFERRED |

EP 0 849 693 A2

# FIG. 12

EXAMPLE OF CONSTRUCTION OF PRIVATE INFORMATION
ACQUIRING PORTION

# FIG. 13

EXAMPLE OF CONSTRUCTION FOR WARNING AGAINST EMERGENCY OPERATION NOT PERFORMED

# FIG. 14

EXAMPLE OF PROCESS FLOW FOR WARNING
AGAINST EMERGENCY OPERATION NOT PERFORMED

141

SPECIFY RECENT EMERGENCY
OPERATION ITEMS

142

SPECIFY EMERGENCY
OPERATION ITEMS
NOT EXECUTED

143

MEASURE DISTANCE
BETWEEN BOTH ITEMS

144

MEASURED DISTANCE
> REFERENCE VALUE ?

NO

YES

145

DISPLAY WARNING WINDOW

146

DO NOT
DISPLAY WARNING WINDOW

# FIG. 15

EXAMPLE OF DISPLAYED OUTPUT FOR WARNING AGAINST EMERGENCY OPERATION NOT PERFORMED

| WEATHER INFO | WATCH ROCKS | SATELLITE IMAGE | E-MAIL | MAP INFO | DISASTER INFO | PREDICTED DAMAGE | EVENT INPUT |

**EMERGENCY OPERATION ITEMS**

- [!] CONNECT TO RELATED ORGAN : PREFECTURE
- [!] START STAFF CALLING SYSTEM : AUTO
- [!] REPORT TO PRIME MINISTER : PREFEC.
- [!] PREFEC RECOMMENDED TO ESTABLISH EOC : GOVERNOR
- [!] ISSUE EMERGENCY DISPOSITION STRUCTURE : AUTO
- [!] PREFEC. CONFIRMED SEISMIC INTENSITY : PREFEC.
- [!] REQUEST FOR INFORM CENTER

**DISASTER INFO CONDITION REPORT**

| EVENT SUMMARY | SENDING SOURCE | TIME | DATE |
|---|---|---|---|
| EARTHQUAKE OF INTENSITY 7 OCCURRED | SEISMIC INTENSITY INFORM OF PREFEC. | 13 : 48 | 8 / 2 |
| | | 13 : 48 | 8 / 2 |

**CAUTION!!**

⚠ ITEM ENCLOSED BY ☐ IS EMERGENCY OPERATION NOT EXECUTED

IMMEDIATELY EXECUTE

[ OK ]

EP 0 849 693 A2

# FIG. 16

EXAMPLE OF CONSTRUCTION AGAINST UNEXPECTED PHENOMENON

INPUT DISASTER INFORMATION

INFORMATION INPUT ACCEPTING PORTION — 161

163

NAMUAL OPERATION INFORM. GENERATOR — 167

EMERGENCY OPERATION RULE STORING PORTION

162

INPUT/OUTPUT UNIT — 164

DECISION SUPPORT INFORMATION GENERATOR

166

DECISION HISTORY STORING PORTION

DECISION INFOMATION EXECUTING PORTION

165

EP 0 849 693 A2

# FIG. 17

EXAMPLE OF PROCESS FLOW
AGAINST UNEXPECTED PHENOMENON

171 — ACCEPT DISASTER INFORMATION INPUT

172 — COMPARE WITH ENERGENCY OPERATION RULE

173 — COMPARE WITH DICISION HISTORY

174 — DECIDE IF DECISION INFORMATION IS GENERATED

175 — MAKE MANUAL OPERATION INFORMATION

# FIG. 18

EXAMPLE OF DISASTER INFORMATION INPUT DATA
WITH IMPORTANCE DEGREE ITEM

**EARTHQUAKE OCCURED_ INTENSITY 7**

| | |
|---|---|
| SENDING SOURCE : | SEISMIC INTENSITY NETWORK OF PREFEC. |
| SENDING TIME : | 1997. 9. 2, 13 : 30 |
| INFORMATION NAME : | EARTHQUAKE OF INTENSITY 7 |
| DEGREE OF IMPORTANCE : | MOST IMPORTANT |
| SEISMIC CENTER : | NORTH AREA OF PREFEC. |
| OCCURRENCE TIME : | 1997. 9. 2, 13 : 25 |

**EMERGENCY DISPOSITION STRUCTURE ISSUED**

| | |
|---|---|
| SENDING SOURCE : | AUTO |
| SENDING TIME : | 1997. 9. 2, 13 : 31 |
| INFORMATION NAME : | EMERGENCY DISPOSITION STRUCTURE ISSUED |
| DEGREE OF IMPORTANCE : | MOST IMPORTANT |

**EVENT SERIES**

| |
|---|
| $\zeta$ |
| ..................... |
| EARTHQUAKE OCCURRED_ INTENSITY 7 |
| EMERGENCY DISPOSITION STRUCTURE ISSUED |
| ..................... |
| $\zeta$ |

EP 0 849 693 A2

# FIG. 19

EXAMPLE OF EMERGENCY OPERATION RULE DATA AGAINST UNEXPECTED PHENOMENON

| (MOST IMPORTANT) AND (NO CORRESPONDING IGNITION CONDITON) |
|---|
| EMERGENCY OPERATION ITEM : UNIDENTIFIED MOST IMPORTANT PHENOMENON OCCURRED |
| DETAILED GUIDANCE<br><br>■ EVENT INFORMATION :<br>〈SENDING TIME〉<br>〈INFORMATION NAME〉<br><br>● REPORT INCLUDES ADDITIONAL INFORM. PLEASE 〈CONFIRM〉 |
| EXECUTION LINK<br><br>SENDING TIME : DISASTER INFORM. SENDING TIME (DISPLAY)<br>INFORMATION NAME : DISASTER INFORM. (START) |

| IGNITION CONDITION SERIES |
|---|
| 〳 |
| ......................... |
| ..................... |
| (MOST IMPORTANT) AND (THERE IS NO CORRESPONDING IGNITION CONDITION) |
| ..................... |
| 〳 |

EP 0 849 693 A2

# FIG. 20

EXAMPLE OF DISPLAYED OUTPUT AGAINST UNEXPECTED PHENOMENON

| WEATHER INFO | WATCH ROCKS | SATELLITE IMAGE | E-MAIL | MAP INFO | DISASTER INFO | PREDICTED DAMAGE | EVENT INPUT |

## EMERGENCY OPERATION ITEM

[ 1 ] CONNECT TO RELATED ORGAN : PREFECTURE
[ 1 ] START STAFF CALLING SYSTEM : AUTO
[ 1 ] UNIDENTIFIED MOST IMPORTANT PHENOMENON OCCURRED

| EVENT SUMMARY | SENDING SOURCE | TIME | DATE |
|---|---|---|---|
| EMERGENCY DISPOSITION STRUC. ISSUED | AUTO | 13 : 48 | 8 / 2 |
| SMOKE EMITTING FROM Mt.FUJIN | | 13 : 48 | 8 / 2 |

■ EVENT INFORMATION

1997／8／2, 13 : 48,
REPORTED FROM VOLCANO
LOGIGAC OBSERVATORY
SMOKE OBSERVED AT Mt.FUJIN

● REPORT INCLUDES ADDITION INFORM.
  PLEASE CONFIRM

FINISHED   DEFERRED

EP 0 849 693 A2

37

# FIG. 21

DISASTER
INFORMATION
INPUT MEANS ~2101

DISASTER INFORMATION
(CAUTION, ACTUAL SITUATION REPORTED)

CONFIRMATION
INFORMATION

INSTRUCTION・
RECOGNITION

DISASTER
INFORMATION
ESTIMATING MEANS ~2102

2104

COMPLEMENTED DISASTER
INFORMATION

2103

2107

OUTPUT MEANS

DECISION SUPPORT
INFORMATION
SUPPLYING MEANS

EMERGENCY
OPERATION RULE
STORING MEANS

REFERENCE INFORM.
OPTIONS

OPERATION
EXECUTING
SITUATON

EMERGENCY OPERATION
RULE

OPERATOR

INSTRUCTION
INPUT MEANS

INSTRUCTION
OPERATION EXECUTING
MEANS ~2106

2105

INSTRUCTION DATA

◄─── : FLOW OF DATA

EP 0 849 693 A2

# FIG. 22

```
INPUT DISASTER
INFORMATION              ⌐～2201
(DISASTER INFORM.
INPUT MEANS)
```

```
COMPLEMENT DISASTER
INFORMATION             ⌐～2202
(DISASTER INFORM.
ESTIMATION MEANS)
```

```
DECIDE REFERENCE
INFORM. OPTIONS FOR
ACTION                  ⌐～2203
(DECISION SUPPORT
INFORM. SUPPLYING MEANS)
```

```
OUTPUT SUPPLIED
INFORMATION             ⌐～2204
(OUTPUT MEANS)
```

```
INPUT INSTRUCTION
OPERATION               ⌐～2205
(INSTRUCT INPUT MEANS)
```

```
EXECUTE INSTRUCTION
OPERATION               ⌐～2206
(INSTRUCT OPERATION
EXECUTING MEANS)
```

# FIG. 23

| 2301 | 2302 | 2303 | REMARK INFORMATION |
|---|---|---|---|
| EQ005 | KOBE DISTRICT METROLOGICAL OBSERVATORY | 1996-11-18-1528 | |

EVENT ISSUE DATE : CODE EXPRESSING "15 : 28, NOV., 18, 1996"

EVENT PUBLISHER, PUBLISHING OFFICE

EVENT NUMBER : CODE EXPRESSING "EARTHQUAKE OF INTENSITY 5 OBSERVED IN PREFECTURE"

EP 0 849 693 A2

# FIG. 24

| EVENT CODE | CONTENTS OF EVENT |
|---|---|
| EQ004 | EARTHQUAKE OF INTENSITY 4 OBSERVED IN PREFECTURE |
| EQ005 | EARTHQUAKE OF INTENSITY 5 OBSERVED IN PREFECTURE |
| EQ006 | EARTHQUAKE OF INTENSITY 6 OBSERVED IN PREFECTURE |
| EQ007 | EARTHQUAKE OF INTENSITY 7 OBSERVED IN PREFECTURE |
| SH001 | EOC ESTABLISHED IN PREFECTURE |
| SH999 | PREFECTURE ABOLISHED EOC |
| TT001 | TUNAMI CAUTION ISSUED |
| TT999 | TUNAMI CAUTION CANCELED |
| TK001 | TUNAMI WARNING ISSUED |
| TK999 | TUNAMI WARNING CANCELED |
| HT001 | FIRST EMERGENCY DISPOSITION STRUCTURE ISSUED |
| HT002 | SECOND EMERGENCY DISPOSITION STRUCTURE ISSUED |
| HT003 | THIRD EMERGENCY DISPOSITION STRUCTURE ISSUED |
| HT999 | EMERGENCY DISPOSITION STRUCTURE CANCELED |
| JS001 | REQUEST FOR SELF-DEFENCE FORCES TO DISPATCH AGAINST DISASTER |
| JS999 | REQUEST FOR SELF-DEFENCE FORCES TO WITHDRAW |
| KS001 | EARTHQUAKE CAUTION DECLARATION ISSUED |
| KS999 | EARTHQUAKE CAUTION DECLARATION CANCELED |
| HK001 | EVACUATION ADVICE ISSUED |
| HK999 | EVACUATION ADVICE CANCELED |

# FIG. 25

EP 0 849 693 A2

EQ005 ← IGNITION CONDITION PORTION :
CODE EXPRESSING "EARTHQUAKE OF
INTENSITY 5 OBSERVED"

2501

ACTION CONTENTS DESCRIBING PORTION
CODE EXPRESSING "EOC ESTABLISHED"

2502          2503                                          2504

| GOVERNOR OF PREFECTURE | SH001 | • LOCAL EMERGENCY OPERATION FIRST CHAP. SECTION 2<br>• MAP OF SOUTH DISTRICT OF PREFECTURE |

MAIN BODY OF ACTION

SUPPLIED INFORMATION
DESCRIBED REGION

| REPORT TO XX BUREAU |  ~2505 |
| EXECUTE CONTENTS OF SAME REPORT ALL AT ONCE |
| ISSUE EMERGENCY DISPOSITION |
| ⋮ |

ACTION LIST :
"LIST OF ACTION TO BE EXECUTED
IN ESTABLISHMENT OF EOC"

# FIG. 26

DISASTER INFORMATION INPUT MEANS ~2101

DISASTER INFORMATION
ESTIMATING MEANS

2102

DISASTER INFORMATION

2602

CONFIRMATION INFORM.

2104

OUTPUT MEANS

COMPLEMENT INFORM. SEARCHING MEANS ~2601

RELATED DISASTER INFORMATION STORING MEANS

2603

2604

COMPLEMENT INFORMATION CONFIRMING MEANS

DISASTER INFORMATION STORING MEANS

OPERATOR

INSTRUCTION INPUT MEANS

2105

INSTRUCT · APPROVE

COMPLEMENTED DISASTER INFORMATION

DECISION SUPPORT INFORMATION SUPPLYING MEANS ~2103

⟵ : FLOW OF DATA

EP 0 849 693 A2

# FIG. 27

2701

EQ004 (EARTHQUAKE OF
INTENSITY 4 OBSERVED
IN PREFECTURE)

2702

SH001 (PREFECTURE
ESTABLISHED EOC)

2703

TT001 (TUNAMI CAUTION ISSUED)

2704

HT001 (FIRST EMERGENCY
DISPOSITION STRUCTURE
ISSUED)

# FIG. 28

RECIEVE DISASTER
INFORMATION ~2801

STORE DISASTER
INFORMATION IN DISASTER
INFORMATION STORING
MEANS ~2802

SEARCH FOR CONTENTS
OF RELATED DISASTER
INFORMATION STORING
MEANS, EXTRACT RELATED
INFORMATION TO RECEIVED
DISASTER INFORMATION ~2803

2804
RELATED INFORMATION
FOUND? NO

YES

EXAMINE IF RELATED
INFORMATION IS PRESENT IN
PAST DISASTER INFORMATION
RECEIVED SO FAR BY
SEARCHING CONTENTS OF
DISASTER INFORMATION
STORING MEANS ~2805

2806
NOT FOUND? NO

YES

SEND RELATED
INFORMATION TO
COMPLEMENT INFORMATION
CONFIRMING MENAS ~2807

EP 0 849 693 A2

# FIG. 29

RECEIVE RELATED
INFORMATION ~2901

DISPLAY QUESTION OF
RELATED INFORMATION
IS EMPLOYED AS NEW
DISASTER INFORMATION
TO OUTPUT MEANS OR
THROWN AWAY ~2902

RECEIVE ANSWER
OPERATOR INPUTTED
THROUGH INSTRUCTION
INPUT MEANS ~2903

EVALUATE ANSWER ~2904

ANSWER="DISCARD
RELAED INFORMATION"

ANSWER="USE RELATED
INFORMATION AS NEW
DISASTER INFORMATION"

STORE RELATED
INFORMATION IN STORAGE
MEANS AS NEW DISASTER
INFORMATION ~2905

46

# FIG. 30

EQ005 (EARTHQUAKE OF INTENSITY 5 OBSERVED IN PREFECTURE) ~3001

~3007

3002
HT002 (SECOND DISPOSITION STRUCTURE ISSUED)

3003
SH001 (PREFECTURE ESTABLISHED EOC)

3004
TK001 (TUNAMI WARNING ISSUED)

~3008

3005
HK001 (EVACUATION ADVICE ISSUED)

3009~

3006
JS001 (REQUEST FOR SELF-DEFENSE FORCES TO DISPATCH)

EP 0 849 693 A2

# FIG. 31

| CODE OF EVENT | OCCURRENCE TIME |
|---|---|
| EQ005 | 1996-11-10-1528 |
| SH001 | 1996-11-10-1530 |
| HT002 | 1996-11-10-1545 |
| TK001 | 1996-11-10-1601 |
| HK001 | 1996-11-10-1620 |
| JS001 | 1996-11-10-1635 |
| ⋮ | ⋮ |

3101     3102

# FIG. 32

EXAMPLE OF CONSTRUCTION FOR CHECKING IF DISASTER INFORMATION IS TRUE

# FIG. 33

EXAMPLE OF PROCESS FLOW FOR CHECKING
IF DISASTER INFORMATION IS TRUE

3301

ACCEPT DISASTER
INFORMATION INPUT

3302

CHECK PROVISIONS
OF EMERGENCY
OPERATION RULE

3303

DECIDE IF DISASTER
INFORMATION IS TRUE

3304

MAKE DECISION SUPPORT
INFORMATION

## FIG. 34

EXAMPLE OF DISASTER INFORMATION INPUT DATA AND EMERGENCY OPERATION RULE DATA IN CHECKING IF DISASTER INFORMATION IS TRUE

**EARTHQUAKE OCCURRED_ INTENSITY 7**

| | |
|---|---|
| SENDING SOURCE : | REPORT FROM CITIZEN |
| SENDING TIME : | 1997. 9. 2. 13 ; 30 |
| INFORMATION NAME : | EARTHQUAKE OF INTENSITY 7 OCCURRED |
| DEGREE OF IMPORTANCE : | MOST IMPORTANT |

DISASTER INFORMATION INPUT DATA

**(MOST IMPORTANT) AND (EARTHQUAKE OF INTENSITY 7. SENDING SOURCE=REPORT FROM CITIZEN)**

EMERGENCY OPERATION ITEM : UNIDENTIFIED MOST IMPORTANT PHENOMENON INPUTTED

DETAILED GUIDANCE

■ EVENT INFORMATION :
  〈SENDING TIME〉
  〈INFORMATION NAME〉

● SEISMIC INTENSITY INFORM. SHOULD BE SENT FROM SEISMIC INTENSITY INFORMATION NETWORK

● REPORT HAS ADDITIONAL INFORMATION PLEASE 〈CONFIRM〉

EXECUTION LINK

SENDING TIME : DISASTER INFORMATION SENDING TIME (DISPLAY)
INFORMATION MANE : DISASTER INFORM. NAME (START)

EMERGENCY OPERATION RULE DATA

**IGNITION CONDITION SERIES**

| |
|---|
| 〜 |
| ............... |
| ............... |
| (MOST IMPORTANT) AND ((EARTHQUAKE OF INTENSITY 7. SENDING SOURCE= REPORT FROM CITIZEN) |
| ............... |
| 〜 |

EP 0 849 693 A2

# FIG. 35

EXAMPLE OF DISPLAYED OUTPUT FOR CHECKING IF DISASTER INFORMATION IS TRUE

| WEATHER INFO | WATCH ROCKS | SATELLITE IMAGE | E-MAIL | MAP INFO | DISASTER INFO | PREDICTED DAMAGE | EVENT INPUT |
|---|---|---|---|---|---|---|---|

## EMERGENCY OPERATION ITEM

- [i] CONNECT TO RELATED ORGAN : PREFECTURE
- [i] START STAFF CALLING SYSTEM : AUTO
- [!] UNIDENTIFIED MOST IMPORTANT PHENOMENON INPUTTED

## DISASTER INFORM · CONDITION REPORT

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF INTENSITY 7 OCCURRED | REPORT FROM CITIZEN | 13 : 48 | 8 / 2 |

■ EVENT INFORMATION :

1997／8／2, 13 : 48,
REPORT FROM CITIZEN
EARTHQUAKE OF INTENSITY 7 OCCURRED IN NORTH AREA
OF PREFECTURE

● SEISMIC INTENSITY INFORM SHOULD BE SENT
FROM SEISMIC INFORM. NETWORK OF PREFEC.

● REPORT HAS ADDITIONAL INFORM. PLEASE CONFIRM.

[ FINISHED ]  [ DEFERRED ]

EP 0 849 693 A2

# FIG. 36

EXAMPLE OF CONSTRUCTION FOR CHANGING RULE AND DECISION SUPPORT
INFORMATION ACCORDING TO A PLURALITY OF CONDITIONS

INPUT DISASTER INFORMATION

3601 — INFORMATION INPUT ACCEPTING PORTION

3607 — RULE SWITCHING PORTION

3604 — INPUT/ OUTPUT UNIT

3602 — DECISION SUPPORT INFORM. GENERATOR

3606 — DECISION INRORM. EXECUTING PORTION

RULE 1 STORING PORTION

3603

RULE 2 STORING PORTION

DECISION HISTORY 1 STORING PORTION

3605

DECISION HISTORY n STORING PORTION

EP 0 849 693 A2

# FIG. 37

EXAMPLE OF PROCESS FLOW FOR CHANGING RULE
AND DECISION SUPPORT INFORMATION
ACCORDING TO A PLURALITY OF CONDITIONS

3701

ACCEPT
RULE SELECTION INPUT

3702

SWITCH TO SELECTED RULE

3703

ACCEPT ASSOCIATED
INFORMATION INPUT

3704

COMPARE
WITH SELECTED RULE

3705

COMPARE WITH ASSOCIATED
DECISION HISTORY

3706

MAKE DECISION
SUPPORT INFORMATIUON

# FIG. 38

EXAMPLE OF DISPLAYED OUTPUT FOR CHANGING RULE AND DECISION SUPPORT INFORM.
ACCORDING TO A PLURALITY OF CONDITIONS

| EMERGENCY DRILL | INITIAL ACTION | RESTORATION STAGE | NORMAL WORK | | | | |

### EMERGENCY OPERATION ITEM

- CONNECT TO RELATED ORGAN : PREFECTURE
- START STAFF CALLING SYSTEM : AUTO
- REPORT TO PRIME MINISTER : PREFECTURE
- PREFECTURE RECOMMENDED TO ESTABLISH EOC : GOVERNOR
- ISSUE DISPOSITION STRUCTURE FOR RESTRATION : AUTO
- CONFIRM FOODS SUPPLY INFORM IN PREFECTURE : PREFECTURE
- REQUEST FOR INFORM. CENTER PACK TO BE SENT OUT : PREFECTURE

### DISASTER INFORM · CONDITION REPORT

| EVENT SUMMARY | SENDING SOURCE | TIME | DATE |
|---|---|---|---|
| RESTORATION DISPOSITION STRUCTURE ISSUED | AUTO | 13 : 48 | 8 / 2 |
| REQUEST FOR FOODS TO SEND | DISASTER SEND | 13 : 48 | 8 / 2 |

■ EVENT INFORMATION

1997／8／2, 13 : 48,
DISASTER SECTION REQUESTED FOR FOODS
TO BE SUPPLIED

● CONFIRM DISTRIBUTION OF FOODS SUPPLY
IN ALL AREAS OF PREFECTURE

| FINISHED | | DEFERRED |

EP 0 849 693 A2

# FIG. 39

EXAMPLE OF CONSTRUCTION FOR CHANGING DECISION SUPPORT INFORMATION
BY INPUTTING EMERGENCY OPERATION RULE

INPUT
DISASTER
INFORMATION

INFORMATION
INPUT
ACCEPTING
PORTION
— 3901

3907

EMERGENCY
OPERATION RULE
PROCESSING
PORTION

3903

3902

EMERGENCY
OPERATION
RULE STORING
PORTION

3904 — INPUT/
OUTPUT
UNIT

DECISION
SUPPORT
INFORMATION
GENERATOR

3906

DECISION
INFORMATION
EXECUTING
PORTION

DECISION
HISTORY
STORING
PORTION

3905

EP 0 849 693 A2

# FIG. 40

EXAMPLE OF PROCESS FLOW FOR CHANGING
DECISION SUPPORT INFORMATION BY INPUTTING
EMERGENCY OPERATION RULE

4001

ACCEPT EMERGENCY
OPERATION RULE INPUT

4002

PROCESS EMERGENCY
OPERATION RULE

4003

STORE IN EMERGENCY
OPERATION RULE
STORING PORTION

4004

ACCEPT DISASTER
INFORMATION INPUT

4005

COMPARE WITH EMERGENCY
OPERATION RULE

4006

MAKE DECISION
SUPPORT INFORMATION

# FIG. 41

## EXAMPLE OF PROCESS FLOW FOR PROCESSING EMERGENCY OPERATION RULE FOR CONTROLLING DISASTER INFORMATION INPUT

4101

INPUT DISASTER EVENT ITEM

4102

INPUT RELATED DISASTER OPERATION ITEM

4103

ACCEPT STORE COMMAND TO STORE IN EMERGENCY OPERATION RULE STORING PORTION

4104

STORE IN EMERGENCY OPERATION RULE STORING PORTION

# FIG. 42

EXAMPLE OF PROCESS FLOW FOR PROCESSING
EMERGENCY OPERATION RULE FOR CONTROLLING
DISASTER OPERATION ITEM OUTPUT

4201

INPUT
DISASTER OPERATION ITEM

4202

INPUT RELATED
DISASTER EVENT ITEM

4203

ACCEPT STORE COMMAND
TO STORE IN EMERGENCY
OPERATION RULE
STORING PORTION

4204

STORE IN EMERGENCY
OPERATION RULE
STORING PORTION

# FIG. 43

EXAMPLE OF PROCESS FLOW FOR PROCESSING
EMERGENCY OPERATION RULE FOR CONTROLLING
GUIDANCE CONTENT OUTPUT

4301

INPUT GUIDANCE CONTENT
INPUT ASSOCIATED WITH
EMERGENCY OPERATION ITEM

4302

SPECIFY KEYWORD

4303

ACCEPT EXECUTION PROCESS
INPUT TO KEYWORD

4304

ACCEPT STORE COMMAND
TO STORE IN EMERGENCY
OPERATION RULE
STORING PORTION

4305

STORE IN EMERGENCY
OPERATION RULE
STORING PORTION

EP 0 849 693 A2

# FIG. 44

EXAMPLE RULE (1) OF DISPLAYED OUTPUT FOR CHANGING DECISION SUPPORT INFORMATION BY INPUTTING EMERGENCY OPERATION

# FIG. 45

EXAMPLE (2) OF DISPLAYED OUTPUT FOR CHANGING DECISION SUPPORT INFORMATION BY INPUTTING EMERGENCY OPE. RULE

| WEATHER INFO | WATCH ROCKS | SATELLITE IMAGE | E-MAIL | MAP INFO | DISASTER INFO | PREDICIDED DAMAGE | EVENT INPUT |

**EMERGENCY OPERATION ITEM**

| | | |
|---|---|---|
| 1 | CONNECT TO RELATED ORGAN : PREFECTURE | |
| 1 | START STAFF CALLING SYSTEM : AUTO | |
| 1 | REPORT TO PRIME MINISTER : PREFECTURE | |
| 1 | PREFECTURE RECOMMENDED TO ESTABLISH EOC : GOVERNOR | |

**DISASTER INFORM · CONDITION REPORT**

| EVENT SUMMARY | SENDING SOURCE | TIME | DATE |
|---|---|---|---|
| ISSUE EMERGENCY DISTRIBUTION | AUTO | 13 : 48 | 8 / 2 |
| EARTHQUAKE OF INTENSITY 7 OCCURRED | SEISMIC INTENSITY INFORM OF PREFECTURE | 13 : 48 | 8 / 2 |

**INPUT WINDOW** | STORE | CANCEL

EMERGENCY OPERATION ITEM

PREFECTURE RECOMMENDED TO ESTABLISH EOC : GOVERNOR

RELATED DISASTER EVENT

EARTHQUAKE OF INTENSITY 7 OCCURRED

■ EVENT INFORMATION :

1997／8／2, 13 : 48,
PREFECTURE ANNOUNCED
SEISMIC INTENSITY INFORM NE
EARTHQUAKE OF INTENSITY 7
OCCURRED IN NORTH AREA OF PREFECTURE

● CONFIRM SEISMIC INTENSITY DISTRIBUTION MAP
OF ALL AREA OF PREFECTURE

| FINISHED | | DEFERRED |

EP 0 849 693 A2

# FIG. 46

EXAMPLE (3) OF DISPLAYED OUTPUT FOR CHANGING DECISION SUPPORT INFORMATION BY INPUTTING EMERGENCY OPE. RULE

| WEATHER INFO | WATCH ROCKS | SATELLITE IMAGE | E-MAIL | MAP INFO | DISASTER INFO | PREDICIDED DAMAGE | EVENT INPUT |

### EMERGENCY OPERATION ITEM

- CONNECT TO RELATED ORGAN : PREFEC
- START STAFF CALLING SYSTEM : AUTO
- REPORT TO PRIME MINISTER : PREFECTURE
- PREFECTURE RECOMMENDED TO ESTABLISH EOC : GOVERNOR
- ISSUE EMERGENCY DISPOSITION : AUTO
- CONFIRM SEISMIC INTENSITY INFORM. OF PREFECTURE : PREFECTURE

### DISASTER INFORM · CONDITION REPORT

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF INTENSITY 7 OCCURRED | SEISMIC INTENSITY INFORM. OF PREFECTURE | 13 : 48 | 8 / 2 |

**GUIDANCE INPUT WINDOW**    STORE    CANCEL

■ EVENT INFORMATION :
1997/8/2, 13 : 48,
PREFECTURE ANNOUNCED SEISMIC
INTENSITY INFORM NETWORK
EARTHQUAKE OF INTENSITY 7
IN NORTH AREA OF PREFECTURE
● INTENSITY DIST MAP

FINISHED    DEFERRED

**EXECUTION PROCESS**    OK    CANCEL

SEISMIC INTENSITY DISTRIBUTION MAP

START SYSTEM :    SEISMIC INTENSITY DISPLAY SYSTEM

EP 0 849 693 A2

# FIG. 47

EXAMPLE OF CONSTRUCTION FOR A PLURALITY OF USERS TO
REFER TO OR INPUT DECISION INFORMATION

# FIG. 48

EXAMPLE OF CONSTRUCTION OF NETWORK FOR A PLURALITY OF
USERS TO REFER TO OR UNPUT DECISION MAKING INFORMATION

```
                    ┌─────────────────────┐
                    │ DISASTER INFORMATION│
                    │      MANAGER        │
                    └─────────────────────┘
```

┌──────────────────┐  ┌──────────────────┐       ┌──────────────────┐  ┌──────────────────┐
│ DECISION SUPPORT │  │ DECISION SUPPORT │ ..... │ DECISION SUPPORT │  │ DECISION SUPPORT │
│   TERMINAL 1     │  │   TERMINAL 2     │       │   TERMINAL n     │  │  TERMINAL n+1    │
└──────────────────┘  └──────────────────┘       └──────────────────┘  └──────────────────┘

EP 0 849 693 A2

# FIG. 49

EXAMPLE OF CONSTRUCTION OF DISASTER
INFORMATION MANAGER

DISASTER
INFORMATION
INPUT ACCEPTING
PORTION  ~4901

4902

DISASTER
INFORMATION
INPUT/ OUTPUT
MANAGER

4903

DISASTER
INFORMATION
STORING
PORTION

4904

DISASTER
INFORMATION
TRANSMITTING AND
RECEIVING PORTION

# FIG. 50

EXAMPLE OF EMERGENCY OPERATION RULE DATA IN GOVERNOR' ROOM

(EARTHQUAKE OCCURRED_
INTENSITY 7)

| EMERGENCY OPE. ITEM : | PREFECTURE RECOMMENDED TO ESTABLISH EOC : GOVERNOR |
| --- | --- |

DETAILED GUIDANCE

- ■ EVENT INFORMATION :
  〈SENDING TIME〉
  PREFECTURE ANNOUNCED SEISMIC INTENSITY INFORM. NETWORK
  EARTHQUAKE OF INTENSITY 7 OCCURRED IN NORTH AREA OF PREFECTURE
- ● GOVERNOR, PLEASE ESTABLISH EOC OF PREFECTURE

    | FINISHED | | DEFERRED |

EXECUTION LINK

SENDING TIME : DISASTER INFORM.
SENDING TIME (DISPLAY)
FINISHED : PREFECTURE FINISHED TO
ESTABLISH EOC (EXECUTE)

IGNITION CONDITION SERIES

〈

..........................

(EARTHQUAKE OCCURRED_
INTENSITY 7)

..........................

..........................

〈

EP 0 849 693 A2

# FIG. 51

EXAMPLE OF EMERGENCY OPERATION RULE DATA
IN DISASTER SECTION OF PREFECTURE

(ESTABLISHMENT OF EOC)

EMERGENCY OPERATION ITEM : | REPORT TO PRIME MINISTER : PREFECTURE

DETAILED GUIDANCE

■ EVENT INFORMATION :
〈SENDING TIME〉
GOVERNOR DECIDED TO ESTABLISH EOC

● TYPE NECESSARY THINGS INTO
〈DESIGNATED FORM〉, TRANSMIT

| FINISHED |    | DEFERRED |

EXECUTION LINK

SENDING TIME : DISASTER INFORM.
SENDING TIME (DISPLAY)
DESIGNATED
FORM : REGULAR FORM DOCUMENT
GENERATING SYSTEM (START)
FINISHED : REPORT TRANSMISSION
"FINISHED" (EXECUTE)

IGNITION CONDITION CENTER

〔

(EOC ESTABLISHED)

〔

EP 0 849 693 A2

# FIG. 52

EXAMPLE OF DISPLAYED OUTPUT IN GOVERNOR'S ROOM

| WEATHER INFO | WATCH ROCKS | SATELLITE IMAGE | E-MAIL | MAP INFO | DISASTER INFO | PREDICTED DAMAGE | EVENT INPUT |

**EMERGENCY OPERATION ITEM**

START STAFF CALLING SYSTEM : AUTO

PREFECTURE RECOMMENDED TO ESTABLISH EOC : GOVERNOR

ISSUE EMERGENCY DISPOSITION : AUTO

■ EVENT INFORMATION

1997/8/2, 13 : 48,

PREFECTURE ANNOUNCED SEISMIC INTENSITY INFORM. NETWORK
EARTHQUAKE OF INTENSITY 7 OCCURRED IN NORTH AREA
OF PREFECTURE

● GOVERNOR, PLEASE ESTABLISH EOC

| FINISHED | | DEFERRED |

**DISASTER INFORMATION • CONDITION REPORT**

| | EVENT SUMMARY | SENDING SOURCE | TIME | DATE |
|---|---|---|---|---|
| ❶ | ISSUE EMERGENCY DISPOSITION | AUTO | 13 : 48 | 8 / 2 |
| ❶ | EARTHQUAKE OF INTENSITY 7 OCCURRED | SEISMIC INTENSITY INFORM. OF PREFEC | 13 : 48 | 8 / 2 |

◁ ▷   ◁ ▷

EP 0 849 693 A2

# FIG. 53

EXAMPLE OF DISPLAYED OUTPUT IN DISASTER SECTION OF PREFECTURE

| WEATHER INFO | WATCH ROCKS | SATELLITE IMAGE | E-MAIL | MAP INFO | DISASTER INFO | PREDICTED IMAGE | EVENT INPUT |

**EMERGENCY OPERATION ITEM**

- CONNECT TO RELATED ORGAN : PREFECTURE
- START STAFF CALLING SYSTEM : AUTO
- REPORT TO PRIME MINISTER : PREFEC.

**DISASTER INFORM · CONDITION REPORT**

| | EVENT SUMMARY | SENDING SOURCE | TIME | DATE |
|---|---|---|---|---|
| | ISSUE EMERGENCY DISPOSITION | AUTO | 13 : 48 | 8 / 2 |
| | EARTHQUAKE OF INTENSITY 7 OCCURRED | SEISMIC INTENSITY INFORM. OF PREFEC. | 13 : 45 | 8 / 2 |
| | PREFEC ESTABLISHED EOC | GOVERNOR | 13 : 50 | 8 / 2 |

■ EVENT INFORMATION :

SENDING TIME
GOVERNOR DECIDED ESTABLISHMENT OF EOC

● TYPE NECESSARY THINGS INTO REGULAR FORM , TRANSMIT

FINISHED    DEFERRED

EP 0 849 693 A2

# FIG. 54

EXAMPLE OF DISPLAYED OUTPUT OF DECISION SUPPORT APPARATUS FOR EMERGENCY OPERATIONS

| WEATHER INFO | WATCH ROCKS | SATELLITE IMAGE | E-MAIL | MAP INFO | DISASTER INFO | PREDICTED DAMAGE | EVENT INPUT |

## EMERGENCY OPERATION ITEM

- CONNECT TO RELATED ORGAN : PREFECTURE
- START STAFF CALLING SYSTEM : AUTO
- REPORT TO PRIME MINISTER : PREFECTURE
- PREFEC, RECOMMENDED TO ESTABLISH EOC : GOVERNOR
- ISSUE EMERGENCY DISPOSITION : AUTO
- CONFIRM SEISMIC INTENSITY INFORM OF PREFEC : PREFECTURE
- REQUEST FOR INFORM. CENTER PACK TO SEND : PREFEC.

## DISASTER INFORM · CONDITION REPORT

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF INTENSITY 7 OCCURRED INFORM. OF PREFEC. | SEISMIC INTENSITY | 13 : 48 | 8 / 2 |

31

32

33

■ EVENT INFORMATION :

1997 / 8 / 2, 13 : 48,

PREFEC. ANNOUCED SEISMIC INTENSITY INFORM. NETWORK EARTHQUAKE OF INTENSITY 7 OCCURRED IN NORTH AREA OF PREFEC.

● CONFIRM SEISMIC INTENSITY DISTRIBUTION MAP OF ALL AREA OF PREFEC.

| FINISHED | DEFERRED |

# FIG. 55

EXAMPLE OF EMERGENCY OPERATION RULE DATA
IN DISASTER SECTION OF PREFEC.

(ESTABLISH EOC)

| EMERGENCY OPERATION ITEM : | REPORT TO PRIME MINISTER : PREFECTURE |
|---|---|

DETAILED GUIDANCE

■ EVENT INFORMATION :
⟨SENDING TIME⟩

GOVERNOR DECIDED TO ESTABLISH EOC

● TYPE NECESSARY THINGS INTO
⟨REGULAR FORM⟩, TRANSMIT

[ FINISHED ]    [ DEFERRED ]

EXECUTION LINK

SENDING TIME : EVENT SENDING TIME (DISPLAY)
DESIGNATED FORM : REGULAR DOCUMENT
GENERATING SYSTEM (START)
FINISHED : REPORT TRANSMISSION
"FINISHED" (EXECUTE)

WARNING    GOVERNOR ESTABLISHED EOC OF
PREFEC.

IGNITION CONDITION SERIES

⟨

·····························

(ESTABLISHED EOC)

·····························

·····························

⟨

EP 0 849 693 A2

# FIG. 56

EXAMPLE OF DISPLAYED OUTPUT IN DISASTER SECTION OF PREFEC.

| WEATHER INFO | WATCH ROCKS | SATELLITE IMAGE | E-MAIL | MAP INFO | DISASTER INFO | PREDICTED DAMAGE | EVENT INPUT |

**EMERGENCY OPERATION ITEM**

- CONNECT TO RELATED ORGAN : PREFEC.
- START STAFF CALLING SYSTEM : AUTO
- REPORT TO PRIME MINISTER : PREFEC.

**DISASTER INFORM · CONDITION REPORT**

| EVENT SUMMARY | SENDING SOURCE | TIME | DATE |
|---|---|---|---|
| ISSUE EMERGENCY DISPOSITION | AUTO | 13 : 48 | 8 / 2 |
| EARTHQUAKE OF INTENSITY 7 OCCURRED | SEISMIC INTENSITY INFORM. OF PREFEC. | 13 : 45 | 8 / 2 |
| PREFEC ESTABLISHED EOC | GOVERNOR'S ROOM | 13 : 50 | 8 / 2 |

CAUTION!!

⚠ GOVERNOR ESTABLISHED EOC OF PREFEC.

OK

EP 0 849 693 A2

# FIG. 57

EXAMPLE OF DISPLAYED OUTPUT FOR CONFIRMING INFORMATION RECEPTION

| POST NAME | STAFF | COMING STAFF | MISSING |
|---|---|---|---|
| POLICE HEAD OFFICE OF PREFEC. | 200 | 156 | 12 |
| FIRE DEP. HEAD OFFICE | 150 | 132 | 3 |
| ELECTRIC MANAGEMENT OFFICE | 40 | 24 | 6 |
| GAS MANAGEMENT OFFICE | 40 | 21 | 2 |
| WATERWORKS OFFICE | 30 | 15 | 8 |
| PREFECTIONAL MEDICAL OFFICE | 25 | 25 | 0 |
| SANITATION FACILITIES | 30 | 30 | 0 |

CALLED SITUATION  RECEIVED SITUATION

RESTOR
STAFF
REPORT
PREFEC
RESTOR
PREFEC

DATE
8 / 2
8 / 2

EP 0 849 693 A2